# EUROPÄISCHE PATENTSCHRIFT

(11) **EP 2 683 631 B1**
(45) Veröffentlichungstag und Bekanntmachung des Hinweises auf die Patenterteilung: **29.03.2017**
(21) Anmeldenummer: 12716179.2
(22) Anmeldetag: 11.01.2012
(51) Int. Cl.: B65G 23/08, B65G 43/10

(54) **FÖRDERROLLE UND ANSCHLUSSBOX FÜR EINE FÖRDERROLLE UND FÖRDERANLAGE SOWIE HERSTELLUNGSVERFAHREN FÜR EINE FÖRDERANLAGE**
CONVEYING ROLLER, JUNCTION BOX FOR A CONVEYING ROLLER, CONVEYING SYSTEM, AND METHOD FOR PRODUCING A CONVEYING SYSTEM
ROULEAU DE TRANSPORT ET BOÎTE DE RACCORDEMENT POUR UN ROULEAU DE TRANSPORT, INSTALLATION DE TRANSPORT ET PROCÉDÉ DE FABRICATION D'UNE INSTALLATION DE TRANSPORT

(30) Priorität: 13.01.2011 AT 522011; 29.06.2011 AT 9472011
(43) Veröffentlichungstag der Anmeldung: 15.01.2014
(60) Teilanmeldung: 16180773.0
(73) Patentinhaber: TGW Mechanics GmbH, 4600 Wels (AT)
(72) Erfinder: REISCHL, Josef, A-4623 Gunskirchen (AT); KRIECHBAUM, Thomas, A-4710 Grieskirchen (AT)
(74) Vertreter: Burger, Hannes
(86) Internationale Anmeldenummer: PCT/AT2012/050005
(87) Internationale Veröffentlichungsnummer: WO 2012/094690

(56) Entgegenhaltungen:
- EP-A1- 0 891 008
- WO-A1-2007/036421
- JP-A- 2004 331 270
- JP-U- 52 008 882

## Beschreibung

Die Erfindung betrifft eine Förderrolle für eine Förderanlage, umfassend zwei Lagerkörper, welche zum Befestigen der Förderrolle in oder an einem Rahmen einer Förderanlage vorbereitet sind, einen dazwischen angeordneten und gegenüber den Lagerkörpern drehbar gelagerten Rollenkörper, eine elektrische Antriebseinheit zum Antrieb des Rollenkörpers sowie eine mit der Antriebseinheit verbundene elektrische Steuereinheit. Weiterhin umfasst die Förderrolle eine elektrisch mit der Steuereinheit verbundene rollenseitige Steckvorrichtung, welche zum elektrischen Verbinden mit einer am Rahmen einer Förderanlage angeordneten anlagenseitigen Steckvorrichtung vorbereitet ist und relativ zum Lagerkörper im Wesentlichen starr positioniert ist.

Weiterhin wird eine Anschlussbox für eine motorisierte Förderrolle einer Förderanlage beschrieben, umfassend eine Auflagefläche, welche dazu vorbereitet ist, im montierten Zustand der Anschlussbox an einem Rahmen der Förderanlage aufzuliegen, erste Schneidklemmkontakte beziehungsweise erste Piercing-Kontakte zum Kontaktieren der Anschlussbox mit einem Kabel zur elektrischen Energieversorgung sowie zweite Schneidklemmkontakte beziehungsweise zweite Piercing-Kontakte zum Kontaktieren der Anschlussbox mit einem Kabel zur Datenübertragung. Weiterhin umfasst die Anschlussbox eine elektrisch mit den ersten und zweiten Schneidklemmkontakten/Piercing-Kontakten verbundene anlagenseitige Steckvorrichtung, welche zum elektrischen Verbinden mit einer rollenseitigen Steckvorrichtung einer am Rahmen der Förderanlage angeordneten Förderrolle vorbereitet ist.

Darüber hinaus betrifft die Erfindung eine Förderanlage zum Fördern von Fördergut mit einem Rahmen, und einer am Rahmen befestigten Förderrolle und/oder einer am Rahmen befestigten Anschlussbox.

Schließlich betrifft die Erfindung ein Verfahren zur Herstellung einer Förderanlage mit einem Rahmen.

Förderanlagen sind heutzutage weit verbreitet und beispielsweise aus keiner Lagerhalle, keiner Produktionsstätte und keinem Post- oder Gepäcksverteilsystem mehr wegzudenken. Sie dienen zum komfortablen Fördern und Sortieren von mitunter sehr schweren Lasten. Im Laufe der Zeit haben sich viele Typen von Förderanlagen herausgebildet, die auf einen jeweiligen Einsatzzweck optimiert sind. Sehr häufig sind Förderanlagen als Rollenförderer ausgebildet, bei denen das Fördergut durch einzelne, mit dem Fördergut temporär in Kontakt stehende, Förderrollen transportiert wird.

Beispielsweise ist aus der gattungsgemäßen JP 2004/331270 A dazu eine motorisierte Förderrolle bekannt, bei der eine in der Rolle angeordnete Steuereinheit über ein Kabel mit einem Stecker verbunden ist, welcher in eine am Rahmen angeordnete Anschlussbox eingesteckt wird.

Aus der EP 0 300 128 A1 ist weiterhin eine Rollenförderbahn mit einer tragenden Struktur in Form eines Paneels bekannt, das im wesentlichen eine ebene Oberfläche darstellt, von der aus nach unten sich U-förmige Kanäle erstrecken, in denen die Rollen aufgenommen sind. Um die Montage der Rollen zu ermöglichen, sind sie mit ihren Achsstummeln in Schnapphalterungen gehalten, welche in Halterungsausschnitte des Paneels vertikal von oben her einschnappend einsetzbar sind. Zusätzlich sind in den Seitenwänden der U-förmigen Kanäle elektrische Leitungen verlegt, die auf der Höhe der Rollen frei liegen. Beim Einschnappen der Rolle wird diese durch federnde Kontakte, welche an der Rolle angebracht sind, elektrisch kontaktiert. Die DE 10 2005 046763 A1 offenbart zudem einen Rollenantrieb bzw. eine mit dem erfindungsgemäßen Rollenantrieb ausgestattete Rollentransporteinrichtung. Der Rollenantrieb weist eine Einrichtung zur Aufnahme elektrischer Bauelemente auf, wobei die Einrichtung als eine Drehmomentstütze für die elektrische Maschine vorgesehen ist. In die Einrichtung kann auch eine Regelungseinrichtung und/oder eine Kommunikationseinrichtung integriert sein. Der Rollenantrieb wird über durch den Rahmen der Fördereinrichtung hindurch ragende Piercing-Kontakte mit einem Energieversorgungskabel und einem Datenkabel elektrisch kontaktiert.

Darüber betrifft die Österreichische Patentanmeldung A2009/01453 der Anmelderin eine Förderanlage zum Fördern von Fördergut mit Rahmenprofilen, einem Bussystem und Förderrollen, wovon eine Förderrolle eine elektrische Kontaktierungsvorrichtung zum Anschluss einer Antriebselektronik an das Bussystem sowie einen Rollenkörper und einen innerhalb von diesem angeordneten Antriebsmotor umfasst. Die Förderrolle ist über eine Lagervorrichtung mit einem der Enden an einem der Rahmenprofile montierbar, wobei während der Montagebewegung der motorisierten Förderrolle relativ zum Rahmenprofil die Kontaktierungsvorrichtung das Bussystem kontaktiert. Die motorisierte Förderrolle und die Lagervorrichtung bilden eine gemeinsame Baueinheit. Die Lagervorrichtung umfasst einen aus der Außenkontur des Rollenkörpers herausragenden Lagerkörper mit einer gegen das Rahmenprofil anlegbaren Außenfläche und eine Halterung für die Befestigung der Kontaktierungsvorrichtung. Die Antriebselektronik und die Kontaktierungsvorrichtung sind über ein elektrisches Leitungssystem verbunden, wobei das Leitungssystem durch eine Aussparung aus der Lagervorrichtung herausgeführt ist. Die Antriebselektronik wird mit Hilfe von Schneidklemm- beziehungsweise Piercing-Kontakten mit einem Kabel zur Energieversorgung und Datenübertragung elektrisch verbunden.

Die US 6,848,933 B1 offenbart schließlich eine weitere Variante einer Anschlussbox für eine Förderanlage, bei der ein Kabel zur Energieversorgung und Datenübertragung mit Hilfe von Schneidklemm- beziehungsweise Piercing-Kontakten elektrisch kontaktiert wird.

Die Aufgabe der Erfindung ist es nun, eine verbesserte Förderrolle, eine verbesserte Anschlussbox für eine Förderrolle, eine verbesserte Förderanlage sowie ein verbessertes Herstellungsverfahren für eine Förderanlage anzugeben. Insbesondere soll eine einfache Möglichkeit angegeben werden, eine Förderrolle mechanisch mit einem Rahmen einer Förderanlage zu verbinden und elektrisch zu kontaktieren. Weiterhin soll insbesondere eine vorteilhafte Möglichkeit zur Montage eines Energieversorgungskabels und eines Datenkabels einer Fördereinrichtung angegeben werden.

Die Aufgabe der Erfindung wird mit einer Förderrolle der eingangs genannten Art gelöst, bei der die Steckvorrichtung durch eine Leiterplatte mit darauf angeordneten Steckkontakten gebildet ist und die Steuereinheit zumindest teilweise auf derselben Leiterplatte angeordnet ist.

Erfindungsgemäß wird so ein besonders einfacher Aufbau einer Förderrolle erzielt, da sowohl die Steuereinheit als auch die Steckvorrichtung zumindest teilweise auf ein und derselben Leiterplatte angeordnet sind. Dies führt einerseits zu verringerten Produktionskosten, andererseits aber auch zu einer verbesserten Montage der Förderrolle.

Dadurch dass die Steckvorrichtung relativ zum Lagerkörper im Wesentlichen starr positioniert ist, kann die Montage der Förderrolle in einem Arbeitsschritt erfolgen. Dies im Gegensatz zu Systemen mit einer Steckvorrichtung, die über ein Kabel mit der Förderrolle verbunden ist, bei denen die mechanische Verbindung der Förderrolle am Rahmen der Förderanlage und die elektrische Kontaktierung derselben in aller Regel in gesonderten Arbeitsschritten erfolgt. In diesem Zusammenhang ist unter "im Wesentlichen starr" eine übliche Steifigkeit einer Leiterplatte zu verstehen, ein Kabel ist dagegen nicht "im Wesentlichen starr". In diesem Zusammenhang wird auch darauf hingewiesen, dass im Rahmen der Erfindung auch besonders flexible Leiterplatten eingesetzt werden, um Fertigungstoleranzen zwischen Förderrolle und Förderanlage leichter ausgleichen zu können. Dennoch wird auch in diesem Fall die mechanische Verbindung der Förderrolle am Rahmen und die elektrische Kontaktierung in einem Arbeitsschritt ermöglicht, das heißt die elektrische Steckverbindung braucht nicht wie bei einer Kabelverbindung durch einen gesonderten Arbeitsschritt zu erfolgen.

Ein weiterer Vorteil der Erfindung besteht darin, dass Lötstellen oder Klemmverbindungen für den Anschluss eines gesonderten Kabels, so wie dies im Stand der Technik häufig notwendig ist, entfallen und damit die Anzahl der möglichen Fehlerquellen reduziert wird. Unter dem Begriff "zumindest teilweise auf derselben Leiterplatte angeordnet" ist im Rahmen der Erfindung zu verstehen, dass sich wenigstens ein elektrisches Bauelement der Steuereinheit auf der Leiterplatte befindet. Unter einem "elektrisches Bauelement" sind insbesondere ein Kondensator, ein Widerstand, eine Spule, ein elektronisches Bauteil und ein elektromechanisches Bauteil zu verstehen. Die rollenseitige Steckvorrichtung und die anlagenseitige Steckvorrichtung sind erfindungsgemäß durch ein Stecker/Buchse-System realisiert, wobei es prinzipiell egal ist, ob rollenseitig ein Stecker oder eine Buchse vorgesehen ist. Besonders vorteilhaft ist es aber, wenn rollenseitig ein Stecker vorgesehen ist. Vorteilhaft kann eine Stecker/Buchse-Verbindung oftmals gelöst und wieder hergestellt werden, ohne dass der elektrische Kontakt zwischen Stecker und Buchse darunter wesentlich leidet. Insbesondere wenn die Kontaktflächen im Wesentlichen parallel zur Steckrichtung angeordnet sind und eine hinlängliche Länge aufweisen, kann auch dann noch ein zuverlässiger elektrischer Kontakt gewährleistet werden, wenn der Stecker nicht vollständig in die Buchse eingesteckt ist. Auf diese Weise können Fertigungstoleranzen zwischen Förderrolle und Rahmen gut ausgeglichen werden. Denkbar wäre beispielsweise auch, dass die Kontaktflächen in Wesentlichen normal zu Steckrichtung angeordnet sind und diese durch Federkraft aneinander gedrückt werden, wodurch ebenfalls noch ein guter elektrischer Kontakt bei nicht vollständig eingestecktem Stecker gewährleistet werden kann. Die zuvor genannten, parallel zur Steckrichtung ausgerichteten und gegeneinander schleifenden Kontaktflächen sind fertigungstechnisch allerdings einfacher herzustellen. Im Gegensatz dazu ermöglicht eine Schneidklemm-/Piercing-Verbindung nur wenig oder gar keinen Toleranzausgleich und muss sehr sorgfältig hergestellt werden. Eine Schneidklemm-/Piercing-Verbindung fällt im Rahmen der Erfindung daher nicht unter die Begriffe "Steckvorrichtung" beziehungsweise "Stecker/Buchse-Verbindung", nicht zuletzt auch deswegen, weil bei einer Schneidklemm-/Piercing-Verbindung eine elektrische Verbindung direkt zu den Leitern eines Kabels hergestellt wird.

Weiterhin wird eine Anschlussbox der eingangs genannten Art beschrieben, bei der die ersten und zweiten Schneidklemmkontakte/Piercing-Kontakte in verschiedenen Bereichen angeordnet sind.

Es wird dadurch ermöglicht, dass für die Energieversorgung und für die Datenübertragung prinzipiell zwei gesonderte Kabel vorgesehen werden können, wodurch ein vorteilhafter Arbeitsablauf bei der Herstellung einer Förderanlage ermöglicht wird, so wie dies im Folgenden noch im Detail dargestellt wird. Zudem trägt eine Trennung von Energieversorgung und Datenübertragung zur erhöhten Sicherheit der Förderanlage bei.

Darüber hinaus wird die Aufgabe der Erfindung durch eine Förderanlage zum Fördern von Fördergut mit einem Rahmen, und einer am Rahmen befestigten erfindungsgemäßen Förderrolle und/oder einer am Rahmen befestigten erfindungsgemäßen Anschlussbox gelöst. Auf diese Weise kann eine besonders einfach herzustellende und auch wenig fehleranfällige Förderanlage hegestellt werden. Damit sind sowohl die Herstellungskosten als auch die Erhaltungskosten niedrig.

Schließlich wird die Aufgabe der Erfindung durch ein Verfahren zur Herstellung einer erfindungsgemäßen Förderanlage mit einem Rahmen gelöst, umfassend die Schritte:
a) Herstellen mehrerer Segmente einer Förderanlage durch:
   - Montage eines Kabels zur elektrischen Energieversorgung am Rahmen,
   - Montage einer Anschlussbox am Rahmen, wobei die ersten Schneidklemmkontakte/Piercing-Kontakte eine elektrische Verbindung zwischen dem Kabel zur elektrischen Energieversorgung und der anlagenseitigen Steckvorrichtung herstellen und
   - Montage einer erfindungsgemäßen Förderrolle am Rahmen, wobei das Einstecken der erfindungsgemäßen Förderrolle in den Rahmen und das Verbinden der rollenseitigen Steckvorrichtung mit der anlagenseitigen Steckvorrichtung in einem Arbeitsschritt erfolgt,
b) Positionieren der Segmente an ihrem Bestimmungsort,
c) Verbinden der Kabel zur elektrischen Energieversorgung benachbarter Segmente und
d) Montage eines Kabel zur Datenübertragung an der Anschlussbox, wobei das Kabel zur Datenübertragung über wenigstens zwei Segmente ungeschnitten verlegt wird.

Gleichermaßen ist es von Vorteil, wenn der Rahmen der erfindungsgemäßen Förderanlage mehrere Segmente umfasst und das Kabel zur Datenübertragung über wenigstens zwei Segmente ungeschnitten verlegt ist. Bei dieser Variante der Erfindung werden die einzelnen Segmente in der Fabrik vorgefertigt und erst an ihrem Bestimmungsort zu einer Förderanlage kombiniert. Schritt b) impliziert dabei das Aneinanderreihen der Segmente bzw. Kombinieren zu einer Förderanlage. Bei der Endmontage werden die Energieversorgungskabel der einzelnen Segmente elektrisch miteinander verbunden. Das Datenkabel wird dagegen wenigstens über zwei Segmente ungeschnitten, d.h. in einem Stück, verlegt, sodass eine zuverlässige Datenverbindung mit hoher Datenrate zwischen den Förderrollen und einer zentralen Steuerung realisiert werden kann. Selbstverständlich kann Schritt d) dabei auch vor Schritt c) erfolgen. Weiterhin kann auch die Montage der Anschlussbox am Rahmen im Schritt a) vor der Montage des Energieversorgungskabels erfolgen.

Durch die erfindungsgemäßen Maßnahmen werden einerseits ein hoher Vorfertigungsgrad, andererseits auch eine zuverlässige Datenverbindung miteinander kombiniert. Durch diese Kombination kann die Herstellung einer Förderanlage kostengünstig erfolgen, ohne Abstriche bei der Qualität hinnehmen zu müssen.

Vorteilhafte Ausgestaltungen und Weiterbildungen der Erfindung ergeben sich aus den Unteransprüchen sowie aus der Beschreibung in Zusammenschau mit den Figuren.

Vorteilhaft ist es bei einer Förderrolle, wenn die Steckkontakte durch eine Leiterbahn der Leiterplatte gebildet sind. Auf diese Weise kann die Förderrolle besonders kostengünstig hergestellt werden. Dadurch, dass bei dieser Variante keine Lötstellen zu einer gesonderten Steckvorrichtung nötig sind, wird die Anzahl der möglichen Fehlerquellen weiter reduziert.

Vorteilhaft ist es bei einer Förderrolle, wenn die Leiterplatte im Bereich der Rollenachse ringförmig oder ringsegment-förmig ausgebildet ist. Auf diese Weise wird der Platz für eine elektronische Schaltung bei einer durchgehenden Rollenachse optimal ausgenutzt. Ist die Rollenachse nicht durchgehend, so kann vorteilhaft auch eine kreisförmige Leiterplatte eingesetzt werden. Eine ringförmige oder ringsegment-förmige Leiterplatte kann durch beliebige Polygone gebildet beziehungsweise begrenzt werden. Desgleichen kann anstelle einer kreisförmigen Leiterplatte ebenfalls eine polygonförmige Leiterplatte verwendet werden.

Besonders vorteilhaft ist eine Förderrolle, wenn:
- die Lagerkörper zum Einstecken in den Rahmen der Förderanlage in einer ersten Steckrichtung vorbereitet sind,
- die erste Steckrichtung zu einer Rollenachse des Rollenkörpers quer ausgerichtet ist,
- die rollenseitige Steckvorrichtung zum elektrischen Verbinden mit der am Rahmen einer Förderanlage angeordneten anlagenseitigen Steckvorrichtung in einer zweiten Steckrichtung vorbereitet ist, und
- a) die erste Steckrichtung und die zweite Steckrichtung parallel zueinander und gleichgerichtet sind oder b) die zweite Einsteckrichtung tangential zu einem Drehpunkt des Lagerkörpers ausgerichtet ist.

Dies ermöglicht eine besonders einfache Montage der Förderrolle, da diese in einem Arbeitsschritt sowohl mechanisch befestigt als auch elektrisch kontaktiert wird. Im Fall a) erfolgt dies wegen der parallelen Ausrichtung der ersten und zweiten Steckrichtung sogar während einer einzigen Bewegung. Im Fall b) wird eine lineare Bewegung (mechanische Befestigung) mit einer Drehbewegung (elektrische Kontaktierung) kombiniert. Insbesondere kann die Montage einer Förderrolle in beiden Fällen werkzeuglos erfolgen.

Günstig ist es bei einer Förderrolle, wenn die Steckkontakte der Steckvorrichtung in Bezug auf die zweite Steckrichtung nebeneinander angeordnet sind, d.h. die rollenseitige Steckvorrichtung umfasst in der zweiten Steckrichtung ausgerichtete Steckkontakte. Auf diese Weise werden Kurzschlüsse beim Einstecken der Steckvorrichtung vermieden.

Günstig ist es bei einer Förderrolle weiterhin, wenn die erste Steckrichtung nach unten weisend ausgerichtet ist. Somit ist eine leichte Montage der Förderrolle gewährleistet, da diese von oben nach unten in den Rahmen der Förderanlage eingesteckt wird und somit das Eigengewicht der Förderrolle den Einsteckvorgang unterstützt.

In diesem Zusammenhang ist es besonders günstig, wenn die erste Steckrichtung im Wesentlichen normal zur Rollenachse und/oder im Wesentlichen normal zu einer Förderebene der Förderanlage ausgerichtet ist. Bei horizontal ausgerichteter Förderbahn bedeutet dies, dass die erste Steckrichtung vertikal ausgerichtet ist. Damit wird der Einsteckvorgang einer Förderrolle besonders intuitiv, da keine komplizierten Bewegungsabläufe nötig sind. Unter "im Wesentlichen normal" ist im Rahmen der Erfindung ein Winkel zwischen etwa 85°-95° zu verstehen.

Vorteilhaft ist es, wenn die Steckvorrichtung der Förderrolle unterhalb des Rollenkörpers angeordnet ist. Auf diese Weise wird die Steckvorrichtung im eingebauten Zustand der Förderrolle optimal durch den Rahmen der Förderanlage geschützt.

Vorteilhaft ist schließlich eine Förderrolle, bei der die Steckvorrichtung mit einem der Lagerkörper eine gemeinsame Baueinheit bildet. Auf diese Weise können Probleme bei der Montage der Förderrolle vermieden werden, da die zueinander starre Positionierung von Steckvorrichtung und Lagerkörper so besonders gut realisiert werden kann.

Günstig ist es bei einer Anschlussbox, wenn die ersten und zweiten Schneidklemmkontakte/Piercing-Kontakte nebeneinander in derselben Ebene angeordnet sind. Bei dieser Variante der Erfindung werden das Energieversorgungskabel und das Datenkabel nebeneinander in einer Ebene, vorzugsweise am Rahmen der Förderanlage angeordnet. Damit ist eine einfache Montage der beiden Kabel gegeben, dennoch können sie zu verschiedenen Zeitpunkten installiert werden.

Günstig ist es bei einer Anschlussbox weiterhin, wenn die ersten und zweiten Schneidklemmkontakte/Piercing-Kontakte in verschiedenen Ebenen angeordnet sind. Bei dieser Variante wird ein Kabel über einem anderen verlegt. Vorzugsweise wird das Datenversorgungskabel über dem zu einem früheren Zeitpunkt verlegten Energieversorgungskabel verlegt. Vorteilhaft kann eine Förderanlage sehr gut vorgefertigt werden. Zudem sind Verwechslungen der beiden Kabel praktisch ausgeschlossen.

In diesem Zusammenhang ist es vorteilhaft, wenn die ersten Schneidklemmkontakte/Piercing-Kontakte der Auflagefläche näher liegen als die zweiten Schneidklemmkontakte/Piercing-Kontakte. Gleichermaßen ist es bei einer Förderanlage vorteilhaft, wenn ein Kabel zur elektrischen Energieversorgung näher am Rahmen angeordnet ist als ein Kabel zur Datenübertragung. Bei dieser Variante wird somit das Energieversorgungskabel direkt am Rahmen oder knapp darüber montiert. Über diese vorgefertigte Einheit aus Rahmen, Anschlussbox und Energieversorgungskabel wird das Datenkabel installiert.

Eine vorteilhafte Variante der erfindungsgemäßen Anschlussbox ist weiterhin gegeben, wenn diese zumindest eine elektrisch mit den ersten und zweiten Schneidklemmkontakten/Piercing-Kontakten verbundene Zusatz-Steckvorrichtung umfasst, welche zum elektrischen Verbinden mit weiteren am Rahmen der Förderanlage angeordneten Elementen vorbereitet ist. Auf diese Weise können neben der Förderrolle auch weitere Elemente, beispielsweise Sensoren, Warnlampen, Aktoren und dergleichen an der Anschlussbox angesteckt werden und somit mit Energie versorgt und an ein Datennetz angeschlossen werden. Vorzugsweise ist die Zusatz-Steckvorrichtung als RJ11-Buchse (von der US-amerikanischen Federal Communications Commission genormt) ausgeführt.

Besonders vorteilhaft ist es schließlich auch, wenn die erfindungsgemäße Anschlussbox zwei weitere Zusatz-Steckkontakte umfasst, welche dazu vorbereitet sind, je ein Verbindungskabel zu einer benachbarten Anschlussbox aufzunehmen. Solche Verbindungskabel werden bevorzugt für eine sogenannte "Daisy-Chain-Leitung" verwendet, um die Förderrollen bei der Initialisierung der Förderanlage zu adressieren. Zu Beginn sind dabei Schalter, welche die beiden Zusatz-Steckkontakte verbinden, geöffnet. Durch die beiden gesonderten Steckkontakte und den geöffneten Schalter wird die Daisy-Chain-Leitung an einer Anschlussbox sicher unterbrochen. Nun wird an einem Ende der Daisy-Chain-Leitung eine Spannung angelegt, was die dem Einspeisepunkt der Spannung nächstgelegene Förderrolle veranlasst, sich über das Datenkabel bei einer zentralen Steuerung zu melden. Die anderen Förderrollen können diese Spannung nicht detektieren, da die Daisy-Chain-Leitung durch die Schalter in den einzelnen Anschlussboxen ja getrennt ist. In Folge wird dieser Förderrolle eine Adresse zugewiesen, und die Förderrolle schließt den genannten Schalter, sodass nun auch eine weitere Förderrolle das genannte Spannungssignal empfangen kann und sich wiederum bei der zentralen Steuerung melden. Auf diese Weise können die Förderrollen nach und nach adressiert werden. Denkbar wäre aber auch, dass das genannte Verbindungskabel zur Kommunikation zweier benachbarter Anschlussboxen ohne Zuhilfenahme des Datenkabels benutzt wird.

Günstig ist es in diesem Zusammenhang, wenn der Rahmen der erfindungsgemäßen Förderanlage Ausnehmungen im Bereich der Zusatz-Steckvorrichtung der Anschlussbox umfasst. Auf diese Weise kann die Zusatz-Steckvorrichtung an die Außenseite des Rahmens der Förderanlage geführt werden, obwohl die Anschlussbox an dessen Innenseite montiert ist. Somit können zusätzliche Elemente leichter mit der Anschlussbox verbunden werden. Insbesondere Warnleuchten können direkt (also ohne Verbindungkabel) an die Zusatz-Steckvorrichtung angesteckt werden und sind dennoch gut sichtbar.

Vorteilhaft ist es weiterhin, wenn, die anlagenseitige Steckvorrichtung schwimmend gelagert ist, insbesondere in Achse der Förderrolle verschiebbar gelagert. Alternativ oder zusätzlich ist es auch vorstellbar, dass die Steckvorrichtung quer zur genannten Achse verschiebbar gelagert ist. Beides trägt dazu bei, dass Fertigungstoleranzen der Förderanlage ausgeglichen werden und sich bei der Montage der Förderrolle, insbesondere beim Einstecken derselben in die Anschlussbox, nicht störend bemerkbar machen. Beispielsweise kann die Steckvorrichtung dazu einen Steckvorrichtungs-Rahmen mit einer umlaufenden Nut aufweisen, in welche das Gehäuse der Anschlussbox im Bereich eines für die Steckvorrichtung vorgesehenen Ausschnitts eingreift. Durch Vorsehen eines Spiels kann die Bewegung des Steckvorrichtungs-Rahmens im Ausschnitt erzielt werden, ohne dass dieser aus dem Ausschnitt herausfallen kann. Um die Bewegung der Steckvorrichtung zu ermöglichen, kann diese zudem innerhalb der Anschlussbox mit Hilfe eines flexiblen Kabels verkabelt sein.

Vorteilhaft ist es auch, wenn die anlagenseitige Steckvorrichtung an einem aus der Anschlussbox geführten Kabel angeordnet ist. Diese Variante der Erfindung ermöglicht einen Ausgleich noch größerer Toleranzen, welche vorteilhaft auch mit der zuvor genannten Variante kombiniert werden kann. Beispielsweise ist es vorstellbar, dass die Steckvorrichtung bei Bedarf aus dem genannten Steckvorrichtungs-Rahmen herausgezogen werden kann, wenn die schwimmende Lagerung alleine nicht ausreicht, um die Fertigungstoleranzen der Förderanlage auszugleichen.

Günstig ist es, wenn der Rahmen einer Förderanlage nach oben hin offene Ausnehmungen umfasst, welche zur Aufnahme von Lagerkörpern der Förderrolle vorgesehen sind. Auf diese Weise kann eine Förderrolle besonders einfach montiert werden, indem sie einfach von oben in den Rahmen der Förderanlage eingesteckt wird.

Eine weitere vorteilhafte Ausgestaltung einer Förderanlage ist dadurch gegeben, dass die Lage einer anlagenseitigen Steckvorrichtung einer Anschlussbox relativ zu der Ausnehmung im Rahmen gleich ist wie die einer rollenseitigen Steckvorrichtung relativ zu dem Lagerkörper der Förderrolle. Unter "Lage" ist dabei die Kombination von Position und Orientierung zu verstehen. Somit passen die Förderrolle und die Anschlussbox zueinander, und die Förderrolle kann in einem Schritt mechanisch und elektrisch mit der Förderanlage verbunden werden.

Günstig ist es auch, wenn die Steckkontakte der anlagenseitigen Steckvorrichtung vom Rahmen beabstandet sind. Auf diese Weise wird ein Kurzschluss der Steckvorrichtung am Rahmen der Förderanlage, der in aller Regel aus Metall besteht, vermieden. Vorteilhaft ist es in diesem Zusammenhang auch, wenn die Kontakte der rollenseitigen Steckvorrichtung auf der dem Rahmen abgewandten Seite der Leiterplatte angeordnet sind.

Günstig ist es beim erfindungsgemäßen Verfahren, wenn im Schritt c) das Kabel zur elektrischen Energieversorgung eines ersten Segments mit dritten Schneidklemmkontakten beziehungsweise dritten Piercing-Kontakten und das Kabel zur elektrischen Energieversorgung eines zum ersten Segment benachbarten zweiten Segments mit vierten Schneidklemmkontakten beziehungsweise vierten Piercing-Kontakten, welche mit den dritten Schneidklemmkontakten beziehungsweise dritten Piercing-Kontakten elektrisch verbunden sind, kontaktiert werden. Auf diese Weise können die einzelnen Abschnitte des Energieversorgungskabels beim Zusammenstellen der Segmente der Förderanlage rationell verbunden werden, ohne auf eine zuverlässige elektrische Kontaktierung verzichten zu müssen. Bestandteil einer Verbindungsbox ist neben den erwähnten Schneidklemmkontakten/Piercing-Kontakten auch eine Leiterplatte, auf der die Schneidklemmkontakte/Piercing-Kontakte befestigt sind und auf der Leiterbahnen vorgesehen sind, welche einander zugeordnete Schneidklemmkontakte/Piercing-Kontakte verbinden. In einer vorteilhaften Ausgestaltung der Erfindung ist die Verbindungsbox, respektive die erwähnte Leiterplatte, mit den Schneidklemmkontakten in die Anschlussbox integriert. Selbstverständlich kann die Anschlussbox auch nur eine einzige Leiterplatte aufweisen, welche sowohl die elektrischen Verbindungen für die Anschlussbox als solche und die Verbindungsbox bereitstellt.

In einer weiteren vorteilhaften Ausgestaltung der Förderanlage weist diese eine Kabelanordnung auf, umfassend
- einen ersten elektrischen Leiter sowie wenigstens einen zweiten elektrischen Leiter, welche gegeneinander isoliert sind,
- mehrere im Verlauf der Leiter angeordnete Steckvorrichtungen mit jeweils mehreren elektrischen Kontakten, wobei jeweils wenigstens ein Kontakt mit einem elektrischen Leiter verbunden ist und,
- wobei der erste Leiter an jeder Steckvorrichtung durchtrennt ist und je ein Ende des ersten Leiters mit je einem elektrischen kontakt verbunden ist.

Durch die spezielle Art der Kabelanordnung, das heißt durch das Vorsehen verschiedener Arten von elektrischen Leitern, kann eine Vielzahl an Aufgaben von ein und derselben Kabelanordnung übernommen werden. Damit wird die Verkabelung einer Förderanlage wesentlich vereinfacht, da die Förderrollen einerseits mit durchgehenden elektrischen Leitern, zusätzlich aber auch mit Kabelsegmenten verbunden werden können. Die genannte Kabelanordnung ermöglicht die erwähnte Verkabelung somit in einem Arbeitsschritt, was bei der vergleichsweise hohen Anzahl von Förderrollen in einer Förderanlage von besonderem Vorteil ist. Durch die erwähnte Variante wird einerseits eine Möglichkeit zur rationellen Verdrahtung von Förderanlagen geschaffen, durch die fabrikmäßige Herstellung der Kabelanordnung aber auch eine hohe Qualität der Verdrahtung erzielt. Besonders vorteilhaft ist es dabei, wenn die Kabelanordnung über wenigstens zwei Segmente ungeschnitten verlegt ist.

Vorteilhaft ist es dabei, wenn der erste Leiter der Kabelanordnung als Daisy-Chain-Leitung und wenigstens ein zweiter Leiter als Datenbusleitung vorgesehen ist. Durch diese Kombination kann die Herstellung einer Förderanlage mit Förderrollen kostengünstig erfolgen, ohne Abstriche bei der Qualität hinnehmen zu müssen. Insbesondere wenn die Kabelanordnung über mehrere Segmente hinweg ungeschnitten verlegt wird, kann eine zuverlässige Datenverbindung mit hoher Datenrate zwischen den Förderrollen und einer zentralen Steuerung realisiert werden. Die Daisy-Chain-Leitung kann wie bereits erwähnt zur Adressierung der Förderrollen bei der Initialisierung der Förderanlage verwendet werden.

Vorteilhaft ist es, wenn zwei zweite Leiter als Twisted-Pair-Leitung ausgeführt und als Datenbusleitung vorgesehen sind. Auf diese Weise ist die Datenbusleitung besonders unempfindlich gegenüber elektromagnetischen Störfeldern, wie sie insbesondere in der rauen Umgebung einer Förderanlage auftreten können.

In diesem Zusammenhang ist es insbesondere auch von Vorteil, wenn die Förderanlage ein am Rahmen angeordnetes und mit den Fördermitteln elektrisch verbundenes Energieversorgungskabel umfasst, wobei die Kabelanordnung außen am Rahmen und das Energieversorgungskabel innen am Rahmen angeordnet ist. Damit kommt der Rahmen der Förderanlage zwischen der Kabelanordnung und dem Energieversorgungskabel zu liegen, weswegen elektromagnetische Felder, die rund um das Energieversorgungskabel entstehen, gut vom Datenbus abgeschirmt werden. Die Datenübertragung kann somit noch zuverlässiger beziehungsweise schneller erfolgen.

Vorteilhaft ist es in diesem Zusammenhang, wenn die elektrische Verbindung der Kabelanordnung mit den Förderrollen durch eine Ausnehmung im Rahmen hindurch erfolgt. Auf diese Weise braucht eine Verdrahtung nicht umständlich über den Rahmen herum geführt werden. Besonders vorteilhaft ist es in diesem Zusammenhang auch, wenn eine Steckvorrichtung einer Anschlussbox im Bereich der genannten Ausnehmung angeordnet ist. Auf diese Weise kann die Kabelanordnung direkt durch die Ausnehmung im Rahmen hindurch an der Anschlussbox angesteckt werden, wodurch die Verdrahtung der Förderanlage weiter vereinfacht wird.

Vorteilhaft ist schließlich ein Verfahren, bei dem im Schritt a) innerhalb eines Segments benachbarte Anschlussboxen mit Hilfe von Verbindungskabeln verbunden werden und nach Ausführen von Schritt b) benachbarte Anschlussboxen benachbarter Segmente in einem Schritt e) über weitere Verbindungskabel verbunden werden. Die Daisy-Chain-Leitung wird also zuerst innerhalb der Segmente der Förderanlage verlegt, dann von Segment zu Segment. Selbstverständlich kann Schritt e) auch vor Schritt c) oder d) erfolgen. Denkbar wäre aber auch, dass die Daisy-Chain-Leitung zur Gänze erst nach dem Schritt b), c) oder d) verlegt wird.

An diese Stelle wird angemerkt, dass die zur Förderrolle genannten Varianten und die sich daraus ergebenden Vorteile sinngemäß auch auf die erfindungsgemäße Anschlussbox, die erfindungsgemäße Förderanlage sowie auf das erfindungsgemäße Verfahren anwendbar sind und umgekehrt.

Zum besseren Verständnis der Erfindung wird diese anhand der nachfolgenden Figuren näher erläutert.

Es zeigen jeweils in stark schematisch vereinfachter Darstellung:
- Fig. 1: eine erfindungsgemäße Förderrolle in Schrägansicht beziehungsweise in Explosionsdarstellung;
- Fig. 2: eine erfindungsgemäße Förderrolle in Draufsicht und in Schnittdarstellung;
- Fig. 3: eine in einen Rahmen einer Förderanlage eingebaute Förderrolle in Schrägansicht;
- Fig. 4: die Förderrolle aus Fig. 3 von der Innenseite des Rahmens betrachtet;
- Fig. 5: die Vorderseite einer Leiterplatte einer Anschlussbox in Schrägansicht;
- Fig. 6: die Rückseite der Leiterplatte aus Fig. 5 in Schrägansicht;
- Fig. 7: die Vorderseite einer Anschlussbox in Schrägansicht;
- Fig. 8: die Rückseite der Anschlussbox aus Fig. 7 in Schrägansicht;
- Fig. 9: einen Querschnitt durch die Förderanlage auf Höhe einer Förderrolle;
- Fig. 10: eine Detaildarstellung des Querschnitts aus Fig. 9;
- Fig. 11: eine Schrägansicht des Querschnitts aus Fig. 10;
- Fig. 12: eine schematische Darstellung wie eine Förderrolle durch eine kombinierte Steckund Drehbewegung im Rahmen einer Förderanlage montiert werden kann;
- Fig. 13: eine Kabelanordnung mit einem ersten elektrischen Leiter und zwei als Twisted-Pair-Leitung ausgeführten zweiten Leitern;
- Fig. 14: eine beispielhafte Förderanlage mit der genannten Kabelanordnung schräg von oben gesehen;
- Fig. 15: eine beispielhafte Förderanlage mit der genannten Kabelanordnung schräg von unten gesehen;
- Fig. 16: Einen Schnitt durch die in den Figuren 14 und 15 dargestellte Förderanlage und
- Fig. 17: Eine Variante einer Förderanlage mit einem in der Anschlussbox angelöteten Verbindungskabel.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

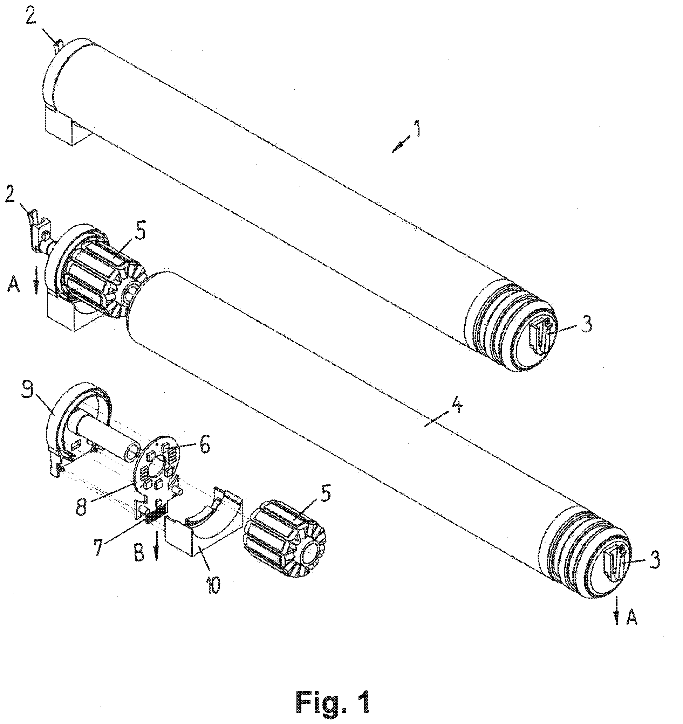

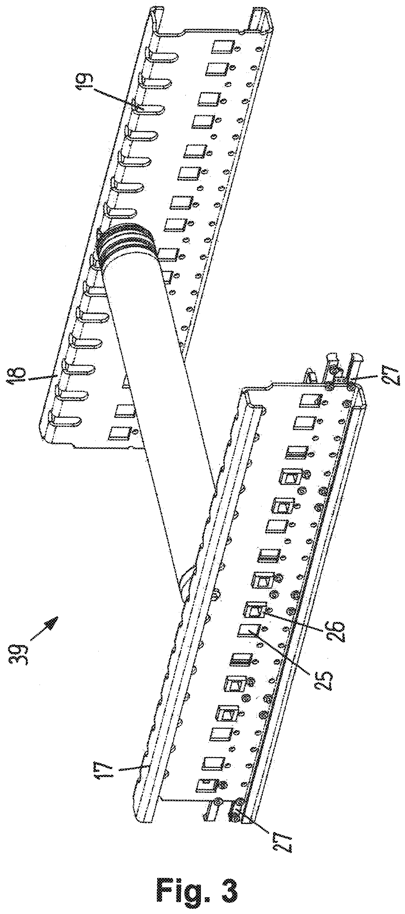

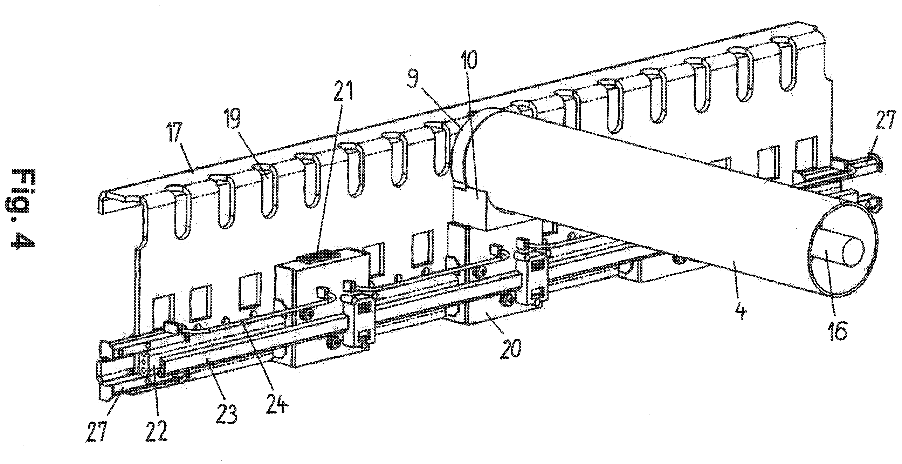

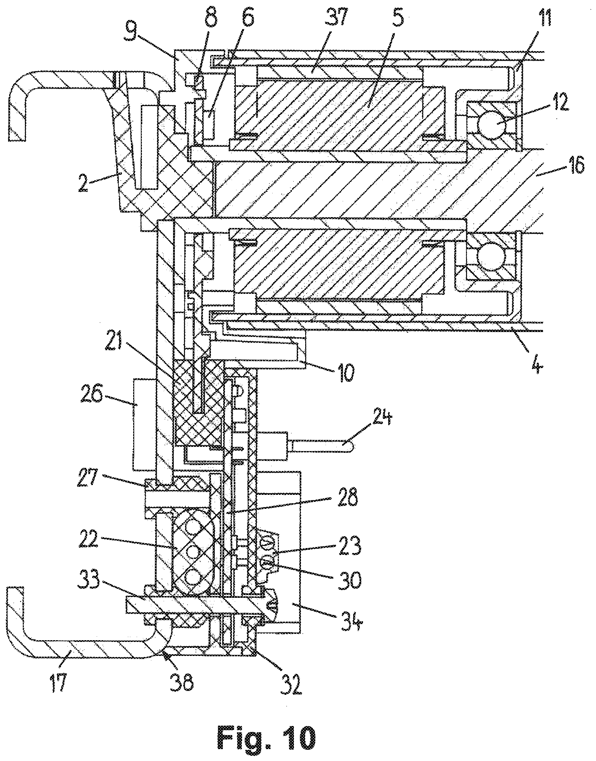

Fig. 1 zeigt eine Förderrolle 1 für eine Förderanlage in Schrägansicht (oben) und in Explosionsdarstellung mit herausgezogener Antriebseinheit (Mitte) sowie die demontierte Antriebseinheit in Explosionsdarstellung (unten). Die Förderrolle 1 umfasst zwei Lagerkörper 2, 3, welche zum Befestigen der Förderrolle 1 in oder an einem Rahmen einer Förderanlage vorbereitet sind (in Fig. 3 dargestellt), und einen dazwischen angeordneten und gegenüber den Lagerkörpern 2, 3 drehbar gelagerten Rollenkörper 4. Weiterhin umfasst die Förderrolle 1 eine elektrische Antriebseinheit 5 (hier ein Stator eines Elektromotors) zum Antrieb des Rollenkörpers 4, eine mit der Antriebseinheit 5 verbundene elektrische Steuereinheit 6 sowie eine elektrisch mit der Steuereinheit 6 verbundene rollenseitige Steckvorrichtung 7, welche zum elektrischen Verbinden mit einer am Rahmen einer Förderanlage angeordneten anlagenseitigen Steckvorrichtung vorbereitet ist (siehe die Figuren 4 sowie 9 bis 11) und relativ zum Lagerkörper 2, 3 im Wesentlichen starr positioniert ist. Vorteilhaft ist die Steckvorrichtung 7 durch eine Leiterplatte 8 mit darauf angeordneten und durch eine Leiterbahn gebildeten Steckkontakten gebildet, und die Steuereinheit 6 ist zumindest teilweise auf derselben Leiterplatte 8 angeordnet. Denkbar wäre aber auch ein auf die Leiterplatte 8 aufgelöteter Stecker oder eine aufgelötete Buchse. Zusätzlich sind in der Fig. 1 ein Rollendeckel 9, eine Abdeckung 10 der Förderrolle 1 dargestellt. Eine detaillierte Darstellung der Förderrolle 1 ist zudem in der Figur 10 zu sehen.

Wie aus der Fig. 1 gut zu erkennen ist, ist die Leiterplatte 8 im Bereich der Rollenachse ringförmig ausgebildet. Denkbar wäre auch, dass sie in einer vorteilhaften Variante ringsegment-förmig ausgebildet ist.

Weiterhin ist in der Fig. 1 eine erste Steckrichtung A zu sehen, in welcher die Lagerkörper 2, 3 in einen Rahmen der Förderanlage eingesteckt werden, sowie eine zweite Steckrichtung B, in welcher die rollenseitige Steckvorrichtung 7 in eine anlagenseitige Steckvorrichtung eingesteckt wird (siehe dazu wiederum die Figuren 4 sowie 9 bis 11). Die erste Steckrichtung A ist dabei zu der Rollenachse des Rollenkörpers 4 quer ausgerichtet, und die erste Steckrichtung A und die zweite Steckrichtung B sind in diesem Beispiel zueinander parallel und gleichgerichtet. Konkret sind die erste Steckrichtung A und die zweite Steckrichtung B im Wesentlichen normal zur Rollenachse und/oder im Wesentlichen normal zu einer Förderebene der Förderanlage ausgerichtet, welche durch die Oberseite mehrerer hintereinander angeordneter Rollen 1 gebildet wird.

Die erste Steckrichtung A und die zweite Steckrichtung B sind darüber hinaus nach unten weisend ausgerichtet. Gut zu sehen ist auch, dass die Steckkontakte der Steckvorrichtung 7 in Bezug auf die zweite Steckrichtung B nebeneinander angeordnet sind. Dabei ist die Steckvorrichtung unterhalb des Rollenkörpers 4 angeordnet. Schließlich ist die Steckvorrichtung 7 auf den Lagerkörper 2 aufgesteckt und bildet mit diesem eine gemeinsame Baueinheit.

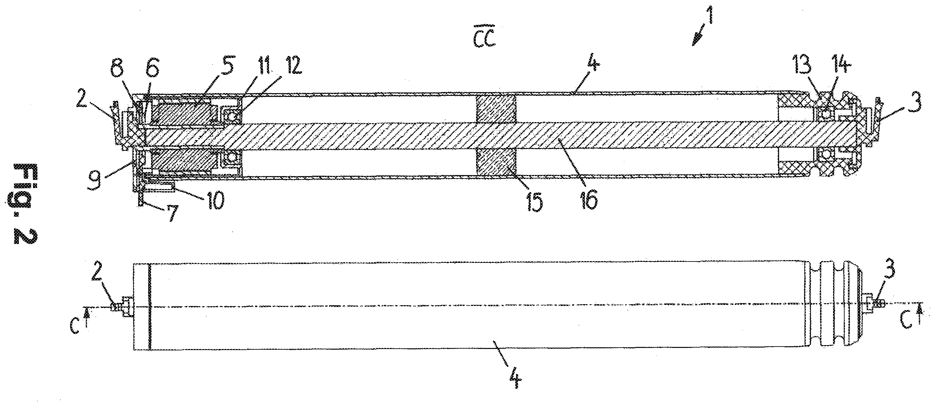

Fig. 2 zeigt die Förderrolle 1 nun in Draufsicht (unten) sowie in Schnittdarstellung (oben). Zusätzlich zu den bereits erwähnten Elementen sind hier eine erste mit dem Rollenkörper 4 verbundene Lagerschale 11, ein darin angeordnetes erstes Lager 12, eine zweite mit dem Rollenkörper 4 verbundene Lagerschale 13 sowie ein darin angeordnetes zweites Lager 14 zu sehen. Die zweite Lagerschale 13 weist in diesem Bespiel zusätzlich optionale und an sich bekannte Rillen zum Antrieb benachbarter Rollen mit Hilfe von Riemen auf, welche in die Rillen eingelegt werden. Weiterhin umfasst die Rolle 1 ein Ableitelement 15, welches der Ableitung elektrostatischer Ladung vom Rollenkörper 4 zu einer Rollenachse 16 dient.

Die Figuren 3 und 4 zeigen, wie die Förderrolle 1 in einen Rahmen einer Förderanlage, konkret zwischen zwei Rahmenteilen 17 und 18, eingebaut werden kann. Die Rahmenteile 17 und 18 weisen in regelmäßigen Abständen Ausnehmungen 19 auf, welche nach oben hin offen sind und in welche die Lagerkörper 2, 3 eingesteckt werden können, um solcherart die Förderrolle 1 in den Rahmenteilen 17 und 18 zu befestigen. Vorteilhaft werden an den Lagerkörpern 2, 3 dazu Befestigungszungen vorgesehen, welche beim Einstecken der Lagerkörper 2, 3 nach außen federn und so die Förderrolle 1 gegen Herausfallen sichern. Unterhalb der Förderrolle 1 ist eine Anschlussbox 20 mit einer anlagenseitigen Steckvorrichtung 21, konkret einer Anschlussbuchse, in welche die Steckkontakte 7 der Förderrolle 1 eingesteckt werden, vorgesehen. Die Lage der anlagenseitigen Steckvorrichtung 21 der Anschlussbox 20 relativ zu der Ausnehmung 19 im Rahmen gleich ist dabei gleich wie die Lage der rollenseitigen Steckvorrichtung 7 relativ zu dem Lagerkörper 2 der Förderrolle 1, sodass die Förderrolle 1 und die Anschlussbox 20 zueinander passen und die Förderrolle 1 in einem Schritt mechanisch und elektrisch mit der Förderanlage verbunden werden kann.

Die in der Fig. 3 dargestellte Anordnung bildet ein Segment 39 einer Förderanlage, welches allerdings noch nicht vollständig mit Förderrollen 4 bestückt ist. Das dargestellte Segment 39 ist zur Aufnahme von insgesamt drei Förderrollen 4 vorbereitet. Selbstverständlich können in der Realität wesentlich längere Segmente 39 mit einer wesentlich höheren Anzahl an Förderrollen 4 vorgesehen werden. Das dargestellte Beispiel soll daher nur das zugrundeliegende Prinzip illustrieren.

Aus der Fig. 3 ist weiterhin zu entnehmen, dass am Rahmenteil 17 ein Kabel zur elektrischen Energieversorgung 22 der Förderrolle 1, ein Kabel zur Datenübertragung 23 von Daten von und zur Förderrolle 1 sowie Verbindungskabel 24, welche benachbarte Anschlussboxen 20 verbinden, verlegt sind. Die Anschlussbox 20 dient vorwiegend dazu, die Anschlussbuchse 21 und in Folge die rollenseitige Steckvorrichtung 7 und somit die Steuereinheit 6 elektrisch mit dem Energieversorgungskabel 22 und dem Datenkabel 23 zu verbinden. In den Figuren sind stets lediglich ein Energieversorgungskabel 22 und ein Datenübertragungskabel 23 dargestellt. Selbstverständlich ist es aber auch möglich, dass mehrere Energieversorgungskabel 22 und/oder mehrere Datenübertragungskabel 23 vorgesehen werden.

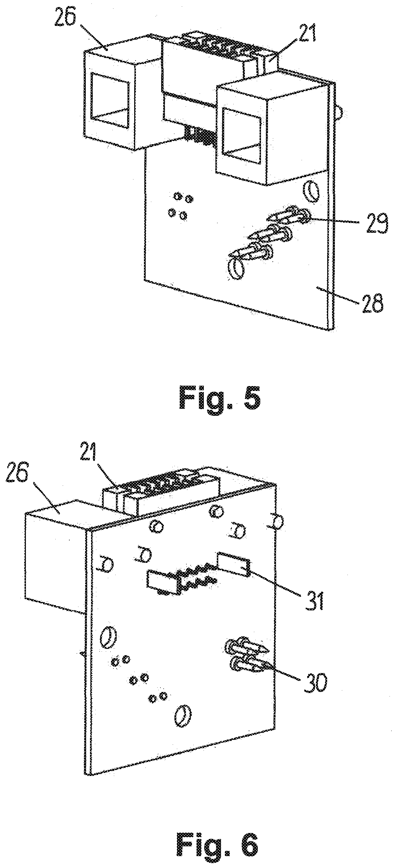

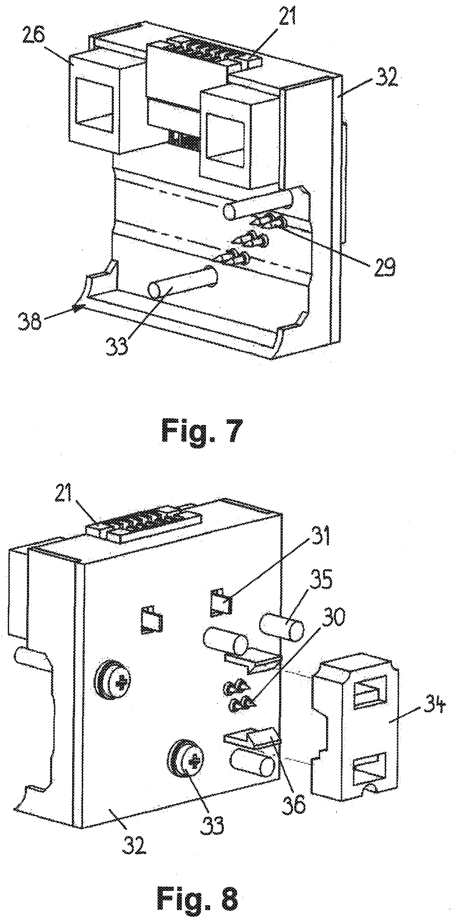

Vorzugsweise umfasst die Anschlussbox 20 eine Auflagefläche 38 (siehe Fig. 7), welche dazu vorbereitet ist im montierten Zustand der Anschlussbox 20 an einem Rahmen 17 der Förderanlage aufzuliegen, erste Schneidklemmkontakte beziehungsweise erste Piercing-Kontakte zum Kontaktieren der Anschlussbox 20 mit dem Kabel zur elektrischen Energieversorgung 22, zweite Schneidklemmkontakte beziehungsweise zweite Piercing-Kontakte zum Kontaktieren der Anschlussbox 20 mit einem Kabel zur Datenübertragung 23 sowie eine elektrisch mit den ersten und zweiten Schneidklemmkontakten/Piercing-Kontakten verbundene anlagenseitige Steckvorrichtung 21, welche zum elektrischen Verbinden mit einer rollenseitigen Steckvorrichtung 7 einer am Rahmen 17, 18 der Förderanlage angeordneten Förderrolle 1 vorbereitet ist. Die ersten und zweiten Schneidklemmkontakte/Piercing-Kontakte sind dabei in verschiedenen Bereichen angeordnet (siehe dazu auch die Figuren 5 bis 8).

Die Verbindungskabel 24 werden bevorzugt für eine sogenannte "Daisy-Chain-Leitung" verwendet, um die Förderrollen 1 bei der Initialisierung der Förderanlage zu adressieren. Zu Beginn sind Schalter (nicht dargestellt), welche die beiden an die Anschlussbox 20 angesteckten Daisy-Chain-Leitungen 24 verbinden, geöffnet. Nun wird an einem Ende der Daisy-Chain-Leitung 24 eine Spannung angelegt, was die dem Einspeisepunkt der Spannung nächstgelegene Förderrolle 1 veranlasst, sich über das Datenkabel 23 bei einer zentralen Steuerung (nicht dargestellt) zu melden. Die anderen Förderrollen 1 können diese Spannung nicht detektieren, da die Daisy-Chain-Leitung 24 durch die Schalter in den einzelnen Anschlussboxen 20 ja getrennt ist. In Folge wird dieser Förderrolle 1 eine Adresse zugewiesen, und die Förderrolle 1 schließt den genannten Schalter, sodass nun auch eine weitere Förderrolle 1 das genannte Spannungssignal empfangen kann und sich wiederum bei der zentralen Steuerung meldet. Auf diese Weise können die Förderrollen 1 nach und nach adressiert werden. Denkbar wäre aber auch, dass das Verbindungskabel 24 zur Kommunikation zweier benachbarter Anschlussboxen 20 ohne Zuhilfenahme des Datenkabels 23 benutzt wird.

Aus der Fig. 3 ist weiterhin zu entnehmen, dass die Rahmenteile 17 und 18 Ausnehmungen 25 umfassen, durch welche Zusatz-Steckvorrichtungen 26 der Anschlussbox 20 hindurch ragen. Diese Zusatz-Steckvorrichtungen 26 (vorzugsweise als RJ11- Buchse ausgeführt) dienen zum elektrischen Verbinden mit weiteren am Rahmen 17, 18 der Förderanlage angeordneten Elementen, beispielsweise mit Sensoren, Warnlampen und dergleichen, die solcherart ebenfalls mit dem Energiekabel 22 und dem Datenkabel 23 elektrisch verbunden sind.

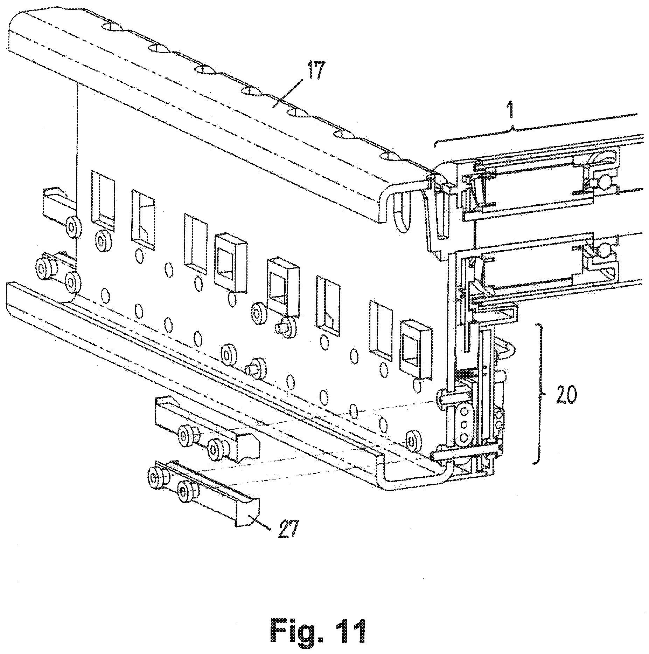

In der Fig. 4 ist zu erkennen, dass das Kabel zur elektrischen Energieversorgung 22 näher am Rahmen 17 angeordnet ist als das Kabel zur Datenübertragung 23. Weiterhin sind in der Fig. 4 Stützkörper 27 dargestellt, welche einerseits eine Halterung für die Energieversorgungskabel 22 bilden, andererseits aber auch für die Montage von Anschlussboxen 20 (siehe insbesondere Fig. 11) beziehungsweise auch für die Montage von Verbindungsboxen vorgesehen sind, welche der Verbindung von Energieversorgungskabeln 22 dienen. Dazu wird je nach Bedarf ein Anschlussbox 20 oder eine Verbindungsbox in den Stützkörper 27 eingesteckt beziehungsweise auf diesen aufgesteckt und vorzugsweise mit diesem verschraubt. Das Vorsehen von Verbindungsboxen hat dabei folgenden Hintergrund:
In einem vorteilhaften Verfahren zur Herstellung einer Förderanlage mit einem Rahmen 17, 18 werden folgende Schritte durchgeführt:
   a) Herstellen mehrerer Segmente 39 einer Förderanlage durch:
      - Montage eines Kabels zur elektrischen Energieversorgung 22 am Rahmen 17,
      - Montage einer Anschlussbox 20, wobei eine elektrische Verbindung zwischen dem Kabel zur elektrischen Energieversorgung 22 und der anlagenseitigen Steckvorrichtung 21 hergestellt wird,
      - Montage einer Förderrolle 1 am Rahmen 17, 18, insbesondere einer Förderrolle 1 wie in der Fig. 1 dargestellt,
   b) Positionieren der Segmente 39 an ihrem Bestimmungsort (impliziert das Aneinanderreihen der Segmente 39 bzw. Kombinieren zu einer Förderanlage),
   c) Verbinden der Kabel zur elektrischen Energieversorgung 22 benachbarter Segmente 39 und
   d) Montage eines Kabel zur Datenübertragung 23 an der Anschlussbox 20, wobei das Kabel zur Datenübertragung 23 über wenigstens zwei Segmente 39 ungeschnitten verlegt wird.

Die einzelnen Segmente 39 werden also in der Fabrik vorgefertigt und erst an ihrem Bestimmungsort zu einer Förderanlage kombiniert. Die Energieversorgungskabel 22 der einzelnen Segmente 39 werden sodann mit Hilfe einer Verbindungsbox (nicht dargestellt) elektrisch miteinander verbunden. Vorzugsweise wird dazu in Schritt c) das Kabel zur elektrischen Energieversorgung 22 eines ersten Segments 39 mit dritten Schneidklemmkontakten beziehungsweise dritten Piercing-Kontakten und das Kabel zur elektrischen Energieversorgung 22 eines zum ersten Segment 39 benachbarten zweiten Segments 39 mit vierten Schneidklemmkontakten beziehungsweise vierten Piercing-Kontakten, welche mit den dritten Schneidklemmkontakten beziehungsweise dritten Piercing-Kontakten elektrisch verbunden sind, kontaktiert. Die genannten Kontakte sind dabei Bestandteil der Verbindungsbox. Erst dann wird das Datenkabel 23 verlegt, welches jedoch über wenigstens zwei Segmente 39 ungeschnitten, d.h. in einem Stück, verlegt wird, sodass eine zuverlässige Datenverbindung mit hoher Datenrate zwischen den Förderrollen 1 und einer zentralen Steuerung realisiert werden kann. Selbstverständlich kann Schritt d) dabei auch vor Schritt c) erfolgen. Denkbar ist auch, dass die Verbindungsbox Bestandteil einer Anschlussbox 20 ist.

Vorzugsweise werden im Schritt a) innerhalb eines Segments 39 benachbarte Anschlussboxen 20 mit Hilfe der Verbindungskabeln 24 verbunden, und nach Ausführen von Schritt b) werden benachbarte Anschlussboxen 20 benachbarter Segmente 39 in einem Schritt e) über weitere Verbindungskabel 24 verbunden. Die Daisy-Chain-Leitung 24 wird also zuerst innerhalb der Segmente 39 verlegt, dann von Segment 39 zu Segment 39. Selbstverständlich kann Schritt e) auch vor Schritt c) oder d) erfolgen. Denkbar wäre auch, dass die Daisy-Chain-Leitung 24 zur Gänze erst nach dem Schritt b), c) oder d) verlegt wird.

Die Figuren 5 und 6 zeigen nun eine Leiterplatte 28, welche in einer Anschlussbox 20 angeordnet ist. Wie bereits erwähnt umfasst die Anschlussbox 20 in einer vorteilhaften Ausführungsform, erste Schneidklemmkontakte beziehungsweise erste Piercing-Kontakte 29 zum Kontaktieren der Anschlussbox 20 mit dem Energieversorgungskabel 22 sowie zweite Schneidklemmkontakte beziehungsweise zweite Piercing-Kontakte 30 zum Kontaktieren der Anschlussbox 20 mit dem Datenkabel 23, welche in den Figuren 5 und 6 nun deutlich zu sehen sind. Leicht erkennbar ist, dass die ersten und zweiten Schneidklemmkontakte/Piercing-Kontakte 29, 30 in verschiedenen Bereichen, konkret in verschiedenen Ebenen, angeordnet sind. Denkbar wäre aber auch, dass sie nebeneinander in derselben Ebene angeordnet sind. Weiterhin sind in den Figuren 5 und 6 zwei weitere Zusatz-Steckkontakte 31 zu sehen, welche dazu vorbereitet sind, je ein Verbindungskabel 24 zu einer benachbarten Anschlussbox 20 aufzunehmen. Die Leiterplatte 28 dient vorwiegend dazu die Schneidklemmkontakte/Piercing-Kontakte 29, 30 sowie die Zusatz-Steckkontakte 31 elektrisch mit der Anschlussbuchse 21 und den Zusatz-Steckvorrichtungen 26 zu verbinden. Ergänzend wird darauf hingewiesen, dass die Kabel 22 und 23 vorzugsweise gasdicht kontaktiert werden.

Die Figuren 7 und 8 zeigen nun die fertige Anschlussbox 20, das heißt die in den Fig. 5 und 6 dargestellte Anordnung mit einem Gehäuse 32, Befestigungsschrauben 33 zur Montage der Anschlussbox 20 am Rahmen 17 der Förderanlage, sowie einer Kabelbefestigung 34, welche mit Hilfe von Stiften 35 ausgerichtet und mit Hilfe von Haken 36 befestigt wird.

In einer bevorzugten Ausführungsform kann die anlagenseitige Steckvorrichtung, also die Anschlussbuchse 21, schwimmend gelagert und insbesondere in Achse der Förderrolle 1 verschiebbar sein. Alternativ oder zusätzlich ist es auch vorstellbar, dass die Anschlussbuchse 21 quer zur genannten Achse verschiebbar gelagert ist. Beides trägt dazu bei, dass Fertigungstoleranzen der Förderanlage ausgeglichen werden und sich bei der Montage der Förderrolle 1, insbesondere beim Einstecken derselben in die Anschlussbox 20, nicht störend bemerkbar machen.

Beispielsweise kann die Anschlussbuchse 21 dazu einen Rahmen mit einer umlaufenden Nut aufweisen, in welche das Gehäuse 32 der Anschlussbox 20 im Bereiche eines für die Anschlussbuchse 21 vorgesehenen Ausschnitts eingreift. Durch Vorsehen eines Spiels kann die Bewegung des genannten Rahmens in dem Ausschnitt erzielt werden, ohne dass dieser aus dem Ausschnitt herausfallen kann. Um die Bewegung der Anschlussbuchse 21 zu ermöglichen, kann diese zudem innerhalb der Anschlussbox 20 mit Hilfe eines flexiblen Kabels verkabelt sein. Besonders vorteilhaft ist es, wenn die Anschlussbuchse 21 bei Bedarf aus dem genannten Rahmen herausgezogen werden kann, wenn die schwimmende Lagerung alleine nicht ausreicht, um die Fertigungstoleranzen der Förderanlage auszugleichen.

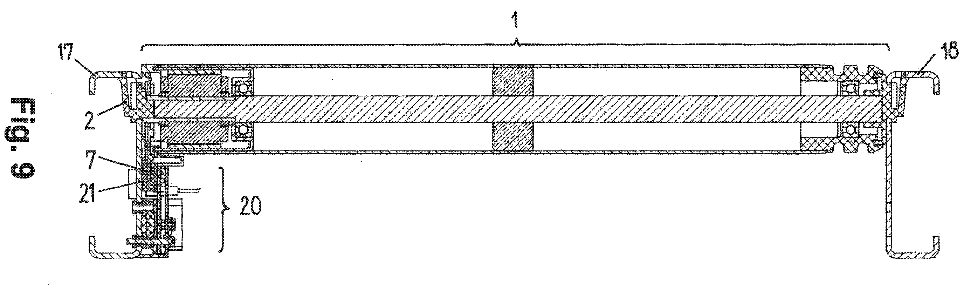

Die Figuren 9 bis 11 zeigen nun einen Schnitt durch die Förderanlage in Höhe der Achse der Förderrolle 1. Zusätzlich zu den bereits erläuterten Bauteilen sind in der Fig. 10 auch Magnete 37, welche gemeinsam mit dem Stator 5 einen Elektromotor bilden, sowie ein Stützkörper 27 zu sehen (besonders deutlich ist dieser der Fig. 11 zu entnehmen). Der Stützkörper 27 dient wie bereits erwähnt einerseits dazu, das Energieversorgungskabel 22 in Position zu halten, andererseits aber auch für das Einschrauben der Befestigungsschrauben 33. Aus der Fig. 10 ist auch entnehmbar, dass die ersten Schneidklemmkontakte/Piercing-Kontakte 29 der Auflagefläche 38 und somit dem Rahmenteil 17 näher liegen als die zweiten Schneidklemmkontakte/Piercing-Kontakte 30. Gut zu sehen ist auch, dass Steckkontakte der anlagenseitigen Steckvorrichtung, d.h. der Anschlussbuchse 21, vom Rahmen 17 beabstandet sind, um Kurzschlüsse beim Ein- oder Ausstecken der Steckvorrichtung 7 zu vermeiden. Weiterhin ist auch erkennbar, dass die Kontakte der Steckvorrichtung 7 in diesem Beispiel aus demselben Grund auf der dem Rahmen 17 abgewandten Seite der Leiterplatte 8 angeordnet sind. In einer alternativen vorteilhaften Ausführungsform können überdies Kontakte auf beiden Seiten der Leiterplatte 8 vorgesehen sein, um bei gleichbleibender Breite der Steckvorrichtung 7 breitere Kontakte oder eine größere Anzahl von Kontakten unterzubringen.

In einer vorteilhaften Variante kann die Verbindungsbox wie erwähnt Bestandteil der Anschlussbox 20 sein. Dazu werden auf der Leiterplatte 28 weitere Schneidklemmkontakte/Piercing-Kontakte vorgesehen, in der Fig. 5 links von den dargestellten Schneidklemmkontakte/Piercing-Kontakten 29. Diese zusätzlichen Schneidklemmkontakte/Piercing-Kontakte werden mit den in der Fig. 5 dargestellten Schneidklemmkontakte/Piercing-Kontakten 29 durch die Leiterplatte 28 verbunden. Auf diese Weise können zwei Energieversorgungskabel 22, welche von links und rechts in die modifizierte Anschlussbox 20 führen, miteinander verbunden werden.

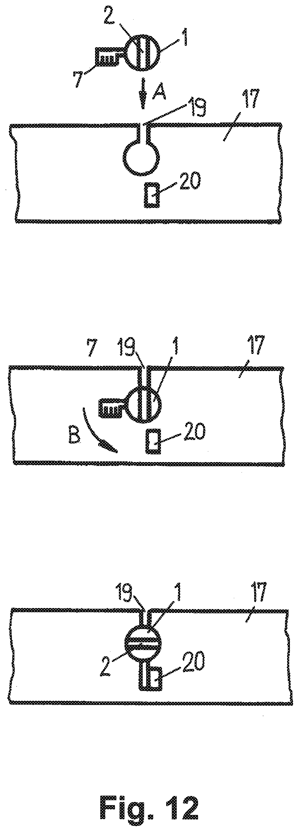

In den vorangegangenen Ausführungen wurde stets davon ausgegangen, dass die erste Steckrichtung A, in welcher die Lagerkörper 2, 3 in einen Rahmen 17, 18 der Förderanlage eingesteckt werden, und die zweite Steckrichtung B, in welcher die rollenseitige Steckvorrichtung 7 in eine anlagenseitige Steckvorrichtung 21 eingesteckt wird, zueinander parallel und gleichgerichtet sind. Dies ist aber keine notwendige Voraussetzung für die Erfindung. Denkbar wäre auch, dass die zweite Steckrichtung B tangential zu einem Drehpunkt des Lagerkörpers 2, 3 ausgerichtet ist. Die Fig. 12, welche den Montagevorgang einer Förderrolle 1 zu drei verschiedenen Zeitpunkten zeigt, soll illustrieren was damit gemeint ist.

Zuerst wird die Förderrolle 1 oberhalb des Rahmens 17, 18 der Förderanlage, konkret oberhalb der Ausnehmung 19 in Position gebracht. Die Steckvorrichtung 7 ist dabei um 90° nach oben in die Horizontale gedreht (oberes Bild). Sodann wird die Förderrolle in einer ersten Steckrichtung A in die Ausnehmung 19 gesteckt und dann verdreht - hier gegen den Uhrzeigersinn (mittleres Bild). Insgesamt werden die Förderrolle 1 beziehungsweise die Lagerkörper 2, 3 um 90° gegen den Uhrzeigersinn gedreht. Dies bewirkt einerseits, dass die Förderrolle durch Verdrehen der länglich ausgebildeten Lagerkörper 2, 3 in der Ausnehmung 19 verriegelt wird. Andererseits wird während der Drehbewegung aber auch die Steckvorrichtung 7 in der zweiten Steckrichtung B, welche tangential zu einem Drehpunkt des Lagerkörpers 2, 3 ausgerichtet ist, in die Anschlussbox 20 gesteckt. Durch die kombinierte Steck- und Drehbewegung wird die Förderrolle 1 also sowohl mechanisch im Rahmen 17 befestigt, als auch elektrisch kontaktiert. Anstelle einer Drehbewegung gegen den Uhrzeigersinn könnte in einer alternativen Ausführungsform natürlich auch eine Drehbewegung im Uhrzeigersinn vorgesehen sein.

Die Fig. 12 soll selbstverständlich nur symbolhaft illustrieren, wie eine Förderrolle 1 durch eine kombinierte Steck- und Drehbewegung montiert werden kann. Neben der konkret ausgeführten mechanischen Verriegelung ist natürlich eine Vielzahl anderer Möglichkeiten von der Erfindung umfasst. Beispielsweise kann ein Zapfen am Lagerkörper 2, 3 entlang eines ringsegment-förmigen Ausschnitts am Rahmen 17, 18 geführt werden und die Förderrolle 1 solcherart gegen Herausfallen sichern. Denkbar wäre beispielsweise auch, dass über die Ausnehmung 19 eine Platte geschoben, gesteckt oder geschraubt wird, sodass die Förderrolle 1 sicher im Rahmen 17, 18 fixiert ist. An dieser Stelle wird angemerkt, dass die Drehpunkte der Lagerkörper 2, 3 nicht notwendiger Weise auf der Achse des Rollenkörpers 4 liegen, sondern auch von dieser beabstandet sein können.

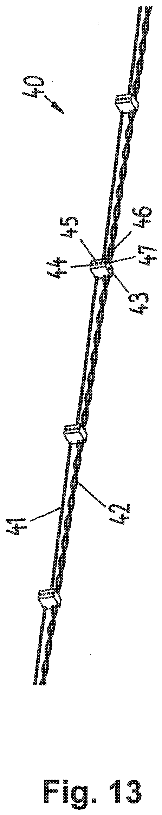

Fig. 13 zeigt nun eine Kabelanordnung 40, umfassend einen ersten elektrischen Leiter 41 und zwei zweite elektrische Leiter 42, welche gegeneinander isoliert sind, sowie mehrere im Verlauf der Leiter 41, 42 angeordnete Steckvorrichtungen 43. Die Steckvorrichtungen 43 sind in diesem Beispiel als Buchsen mit jeweils mehreren elektrischen Kontakten 44..47 ausgeführt, wobei jeweils wenigstens ein Kontakt 44..47 mit einem elektrischen Leiter 41, 42 verbunden ist. Selbstverständlich könnten die Steckvorrichtungen 43 aber auch als Stecker ausgeführt sein.

Konkret sind die Kontakte 44 und 45 mit dem ersten elektrischen Leiter 41, die Kontakte 46 und 47 mit jeweils einem zweiten elektrischen Leiter 42 verbunden. Dabei ist der erste Leiter 41 an jeder Steckvorrichtung 43 durchtrennt, und je ein Ende des ersten Leiters 41 ist mit je einem elektrischen Kontakt 44, 45 verbunden (Beachte den seitlichen Versatz des ersten Leiters 41 an jeder Steckvorrichtung 43).

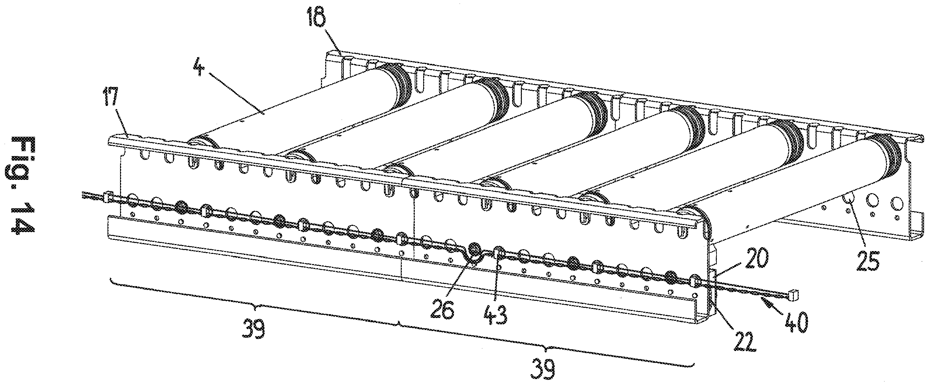

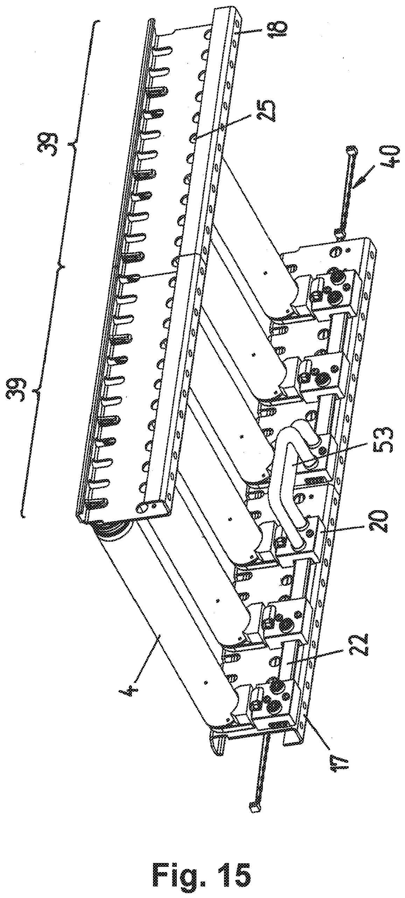

Die Figuren 14 und 15 zeigen weiterhin eine Förderanlage. konkret zwei Bauabschnitte 39 derselben, mit einem Rahmen 17, 18 und mehreren dazwischen angeordneten, motorisch angetriebenen Förderrollen 1 sowie einer am Rahmen 17 befestigten und mit den Förderrollen 1 elektrisch verbundenen Kabelanordnung 40 (Fig. 14 schräg von oben, Fig. 15 schräg von unten).

Am Rahmen 17 ist ein Energieversorgungskabel 22 angeordnet, welches mit den Förderrollen 1 elektrisch verbunden ist. Vorzugsweise ist die Kabelanordnung 40 wie hier dargestellt außen am Rahmen 17 und das Energieversorgungskabel 22 innen am Rahmen 17 angeordnet. Weiterhin sind am Rahmen 17 Anschlussboxen 20 angeordnet, welche für die elektrische Verbindung der Förderrolle 1 mit der Kabelanordnung 40 sowie dem Energieversorgungskabel 22 vorgesehen sind. Die elektrische Verbindung der Kabelanordnung 40 mit den Förderrollen 1 erfolgt dabei vorzugsweise durch eine Ausnehmung 25 im Rahmen 17 hindurch, wobei die Kabelanordnung 40 über die Steckvorrichtungen 43 direkt mit den Anschlussboxen 20 und diese wiederum über ein Anschlusskabel mit den Förderrollen 1 verbunden sind.

Schließlich umfasst die Förderanlage noch zwei Verbindungskabel 53 (in Fig. 15 vereinfacht ohne Stecker dargestellt), welche die Segmente des Energieversorgungskabels 22 über die Bauabschnitte hinweg verbinden. In diesem Beispiel ist eines der beiden Verbindungskabel 53 für eine 24-Volt-Versorgung, das andere Verbindungskabel 53 für eine 48-Volt-Versorgung vorgesehen. Selbstverständlich ist es aber auch möglich, die Energieversorgungskabel 22 mit einem einzigen Verbindungskabel 53 zu verbinden.

Im konkreten Beispiel ein sind zwei zweite Leiter 42 als Datenkabel vorgesehen, welche als Twisted-Pair-Leitung ausgeführt ist. Dies trägt zu einer weitgehend störsicheren Datenübertragung von und zu den Förderrollen 1 bei, selbstverständlich könnte das Datenkabel 42 aber beispielsweise auch als Bandkabel, insbesondere als geschirmtes Bandkabel ausgeführt sein.

Weiterhin wird der erste Leiter 41 der Kabelanordnung 40 als Daisy-Chain-Leitung beziehungsweise Verbindungsleitung 24 im Rahmen eines Initialisierungsprozesses der Förderanlage verwendet. Die einzelnen Segmente des ersten Leiters 41, welche jeweils zwei Förderrollen 1 miteinander verbinden, können dazu über einen Schalter (nicht dargestellt), welcher entweder in der Förderrolle 1 selbst oder aber in der Anschlussbox 20 angeordnet ist, verbunden werden. Der Initialisierungsprozess läuft dabei analog zu der bereits zuvor beschriebenen Weise ab.

Auch ist das bereits beschriebene vorteilhafte Verfahren zur Herstellung einer Förderanlage für die in den Figuren 14 und 15 dargestellte Variante der Förderanlage anwendbar. In einem ersten Schritt a) werden dazu wiederum mehrere Segmente 39 der Förderanlage hergestellt, wobei jeweils ein Kabel 22 zur elektrischen Energieversorgung der Förderrolle 1 am Rahmen 17 montiert und die Förderrollen 1 am Rahmen 17 befestigt sowie mit dem Energieversorgungskabel 22 elektrisch verbunden werden. In einem zweiten Schritt b) werden die Segmente 39 an ihrem Bestimmungsort positioniert, und in einem dritten Schritt c) werden die Energieversorgungskabel 22 benachbarter Segmente 39 miteinander verbunden. In der Fig. 15 ist dazu gut erkennbar, dass die Anschlussboxen 20 Buchsen aufweisen, über welche die Anschlussboxen 20 und damit die einzelnen Abschnitte des Energieversorgungskabels 22 mit einem eigens dafür vorgesehenen Kabel 53 verbunden werden. In einem vierten Schritt d) wird schließlich eine Kabelanordnung 40 am Rahmen 17 montiert und mit den Förderrollen 1 elektrisch kontaktiert, wobei die Kabelanordnung 40 über wenigstens zwei Segmente 39 ungeschnitten verlegt wird.

Das Datenkabel 42, hier realisiert durch die Twisted-Pair-Leitung, wird somit wenigstens über zwei Segmente ungeschnitten, d.h. in einem Stück, verlegt, sodass eine zuverlässige Datenverbindung mit hoher Datenrate zwischen den Förderrollen 1 und einer zentralen Steuerung realisiert werden kann. Desweiteren umfasst die Kabelanordnung 40 auch eine Daisy-Chain-Leitung, weswegen die in Fig. 3 und 4 sowie 9 bis 11 dargestellten Verbindungsleitungen 24 entfallen können. Die Verkabelung einer Förderanlage kann mit Hilfe der Kabelanordnung 40 also besonders rationell erfolgen. Dadurch dass die Kabelanordnung 40 vorgefertigt werden kann, ist die Gefahr von Kontaktfehlern zudem sehr gering.

Im obigen Beispiel ist die Energieversorgungsleitung 22 als gesondertes Kabel ausgeführt. Dies ist vorteilhaft, da die Energieversorgungsleitung 22 so wie in den Figuren 14 und 15 dargestellt innen am Rahmen 17 angeordnet werden kann, wohingegen die Kabelanordnung 40 außen am Rahmen 17 angeordnet ist. Durch den zwischen dem Energieversorgungskabel 22 und dem Datenbus 42 angeordneten Rahmen 17 werden elektromagnetische Felder, die rund um das Energieversorgungskabel 22 entstehen, gut vom Datenbus 42 abschirmt. Gleichwertig kann das Energieversorgungskabel 22 natürlich auch außen am Rahmen 17 angeordnet und die Kabelanordnung 40 innen am Rahmen 17 befestigt sein.

Darüber hinaus ist es noch vorstellbar, dass die Förderanlage überhaupt kein gesondertes Energieversorgungskabel 22 umfasst, sondern wenigstens ein zweiter Leiter 42 der Kabelanordnung 40 als Energieversorgungsleitung vorgesehen ist. Die Verdrahtung einer Förderanlage beschränkt sich dann im Wesentlichen auf das Einstecken der Steckvorrichtungen 43 in die Anschlussboxen 20 oder in die Förderrolle 1.

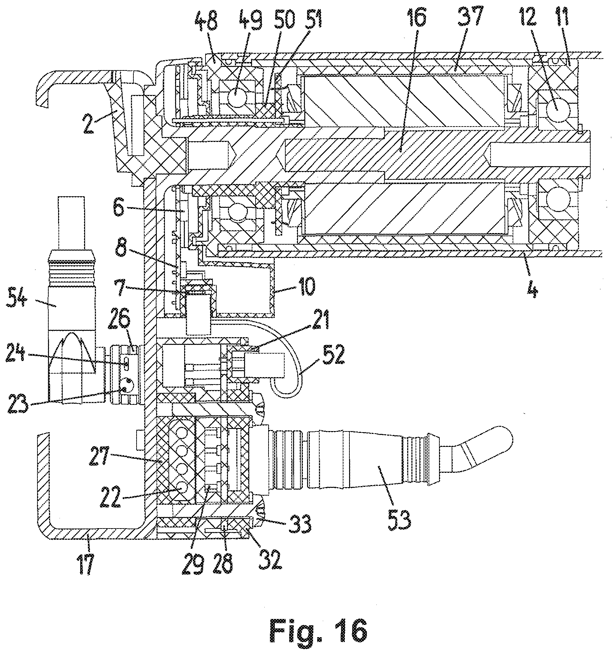

Fig. 16 zeigt ähnlich wie Fig. 10 einen Schnitt durch eine Förderanlage in Höhe der Achse der Förderrolle 1, allerdings in einer etwas abgewandelten Variante. Konkret ist ein Schnitt durch die in den Figuren 14 und 15 dargestellte Förderanlage dargestellt. Die wesentlichsten Unterschiede zur Variante aus Fig. 10 sind, dass sich die Rollenachse 16 nicht über die gesamte Länge der Förderrolle 1, sondern nur im Wesentlichen über die Länge der Antriebseinheit 5 erstreckt. Deswegen umfasst die Förderrolle 1 auch eine dritte Lagerschale 48 mit einem dritten Lager 49. Ein weiterer Unterschied besteht darin, dass die elektrische Verbindung von der Antriebseinheit 5, d.h. konkret von deren Statorwicklungen, zur Leiterplatte 8 über eine Kontakthülse 50 mit eingearbeiteten elektrischen Leitern sowie eine Motorleiterplatte 51 erfolgt, an welche die Statorwicklungen angelötet sind.

Ein weiterer wesentlicher Unterschied besteht darin, dass das Datenkabel 23 und das Verbindungskabel 24 anders verlegt ist, als in der in Fig. 10 dargestellten Variante. Dieses ist nämlich als Kabelanordnung 40 ausgeführt und wie in den Figuren 13 bis 15 verlegt.

Desweiteren ist die Förderrolle 1 mit der Anschlussbox 20 nicht wie in den Figuren 3 und 4 sowie 9 bis 11 direkt, sondern indirekt über das gesonderte Verbindungskabel 52 verbunden.

Weiterhin ist in der Fig. 16 ein Energieversorgungs-Verbindungskabel 53 gezeigt, welches die einzelnen Segmente des Energieversorgungskabels 22 verbindet. Schließlich zeigt die Fig. 16 ein Zusatzkabel 54, welches an der Zusatz-Steckvorrichtung 26 angesteckt ist und beispielsweise zu einem zusätzlichen Sensor/Aktuator der Förderanlage (nicht dargestellt) führt.

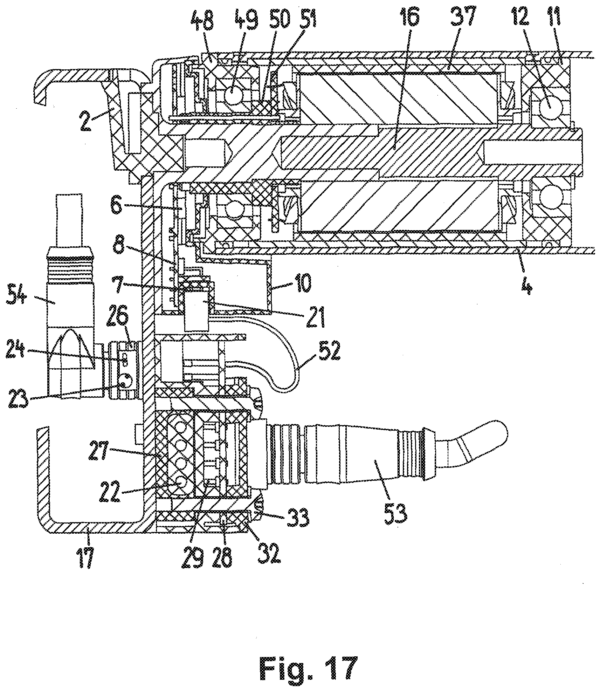

Fig. 17 zeigt schließlich eine Ausführungsvariante der Förderanlage, welcher der in Fig. 16 dargestellten Variante sehr ähnlich ist. Im Unterschied dazu ist in diesem Beispiel aber ein Verbindungskabel 52 vorgesehen, welches an der Leiterplatte 28 angelötet ist, weswegen die Steckvorrichtung 21 direkt auf die Steckvorrichtung 7 aufgesteckt wird. Beide in den Figuren 16 und 17 dargestellten Varianten ermöglichen einen Ausgleich vergleichsweise größerer Toleranzen einer Förderanlage, sodass die elektrische Kontaktierung zwischen Förderrolle 1 und Anschlussbox 20 in jedem Fall sicher erfolgen kann.

In einer besonders vorteilhaften Variante kann die Steckvorrichtung 21 wie in Fig. 10 dargestellt angeordnet sein, insbesondere schwimmend gelagert sein (d.h. in Richtung der Achse der Förderrolle 1 und/oder quer dazu verschiebbar) und auch wie in Fig. 17 dargestellt an einem Verbindungskabel 52 befestigt sein. Die Förderrolle 1 kann dann standardmäßig wie in Fig. 10 vorgesehen eingesteckt werden. Funktioniert dies nicht, beispielsweise wegen zu großer Fertigungstoleranzen der Förderanlage oder weil die Anschlussbox 20 irrtümlich an einer falschen Stelle eingebaut wurde, so kann die Steckvorrichtung 21 bei Bedarf am Verbindungskabel 52 aus der Anschlussbox 20 herausgezogen werden, um die Anschlussbox 20 mit der Förderrolle 1 zu verbinden.

Die Ausführungsbeispiele zeigen mögliche Ausführungsvarianten einer erfindungsgemäßen Förderrolle 1 einer erfindungsgemäßen Anschlussbox 20 beziehungsweise einer erfindungsgemäßen Förderanlage sowie einer erfindungsgemäßen Kabelanordnung 40, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Weiterhin wird darauf hingewiesen, dass eine reale Förderanlage mehr Bestandteile und andere Bestandteile als dargestellt umfassen kann. Zudem wird darauf hingewiesen, dass zum besseren Verständnis des Aufbaus der Förderrolle 1, der erfindungsgemäßen Anschlussbox 20 beziehungsweise der erfindungsgemäßen Förderanlage sowie der erfindungsgemäßen Kabelanordnung 40 diese bzw. deren Bestandteile teilweise unmaßstäblich und/oder vergrößert und/oder verkleinert dargestellt wurden.

Schließlich wird darauf hingewiesen, dass die Förderrollen 1 auch Bestandteil eines Gurtförderers (im Speziellen eines Staugurtförderers) sein können. Dabei wird ein Gurt über mindestens zwei Förderrollen 1 gespannt, welcher dann den Transport der Förderobjekte besorgt. Denkbar wäre darüber hinaus auch, dass die Förderrollen 1 Bestandteil eines Flachriemenförderers sind. Dabei werden mehrere Flachriemen über wenigsten zwei Förderrollen 1 gespannt, welche zur besseren Führung der Flachriemen entsprechende Nuten aufweisen können.

Die den eigenständigen erfinderischen Lösungen zugrundeliegende Aufgabe kann schließlich der Beschreibung entnommen werden. Insbesondere können Förderrolle 1, die erfindungsgemäßen Anschlussbox 20, die erfindungsgemäße Förderanlage, das Verfahren zu deren Herstellung sowie die erfindungsgemäße Kabelanordnung auch unabhängige Erfindungen bilden.

**Bezugszeichenaufstellung**

| | | | |
|---|---|---|---|
| 1 | Förderrolle | 41 | Erster elektrischer Leiter |
| 2 | Lagerkörper | 42 | Zweiter elektrischer Leiter |
| 3 | Lagerkörper | 43 | Steckvorrichtung |
| 4 | Rollenkörper | 44 | Kontakt |
| 5 | Antriebseinheit | 45 | Kontakt |
| | | | |
| 6 | Steuereinheit | 46 | Kontakt |
| 7 | Steckvorrichtung | 47 | Kontakt |
| 8 | Leiterplatte | 48 | Lagerschale |
| 9 | Rollendeckel | 49 | Lager |
| 10 | Abdeckung | 50 | Kontakthülse |
| | | | |
| 11 | Lagerschale | 51 | Motorleiterplatte |
| 12 | Lager | 52 | Verbindungskabel |
| 13 | Lagerschale | 53 | Energieversorgungs-Verbindungskabel |
| 14 | Lager | | |
| 15 | Ableitelement | 54 | Zusatzkabel |
| | | | |
| 16 | Rollenachse | A | erste Steckrichtung |
| 17 | Rahmenteil | B | zweite Steckrichtung |
| 18 | Rahmenteil | | |
| 19 | Ausnehmung | | |
| 20 | Anschlussbox | | |
| | | | |
| 21 | Anschlussbuchse | | |
| 22 | Energieversorgungskabel | | |
| 23 | Datenkabel | | |
| 24 | Verbindungskabel | | |
| 25 | Ausnehmung | | |
| | | | |
| 26 | Zusatz-Steckvorrichtung | | |
| 27 | Stützkörper | | |
| 28 | Leiterplatte | | |
| 29 | erste Schneidklemmkontakte | | |
| 30 | zweite Schneidklemmkontakt | | |
| | | | |
| 31 | Zusatz-Steckkontakt | | |
| 32 | Gehäuse | | |
| 33 | Befestigungsschrauben | | |
| 34 | Kabelbefestigung | | |
| 35 | Stift | | |
| | | | |
| 36 | Haken | | |
| 37 | Magnete | | |
| 38 | Auflagefläche | | |
| 39 | Segment | | |
| 40 | Kabelanordnung | | |

## Patentansprüche

1. Förderrolle (1) für eine Förderanlage, umfassend
- zwei Lagerkörper (2, 3), welche zum Befestigen der Förderrolle (1) in oder an einem Rahmen (17, 18) einer Förderanlage vorbereitet sind,
- einen dazwischen angeordneten und gegenüber den Lagerkörpern (2, 3) drehbar gelagerten Rollenkörper (4),
- eine elektrische Antriebseinheit (5) zum Antrieb des Rollenkörpers (4),
- eine mit der Antriebseinheit (5) verbundene elektrische Steuereinheit (6) sowie
- eine elektrisch mit der Steuereinheit (6) verbundene rollenseitige Steckvorrichtung (7), welche zum elektrischen Verbinden mit einer am Rahmen (17, 18) einer Förderanlage angeordneten anlagenseitigen Steckvorrichtung (21) vorbereitet ist und relativ zum Lagerkörper (2, 3) im Wesentlichen starr positioniert ist,
**dadurch gekennzeichnet, dass**
die Steckvorrichtung (7) durch eine Leiterplatte (8) mit darauf angeordneten Steckkontakten gebildet ist und die Steuereinheit (6) zumindest teilweise auf derselben Leiterplatte (8) angeordnet ist.

2. Förderrolle (1) nach Anspruch 1, **dadurch gekennzeichnet, dass** die Steckkontakte durch eine Leiterbahn der Leiterplatte (8) gebildet sind.

3. Förderrolle (1) nach Anspruch 1 oder 2, **dadurch gekennzeichnet, dass** die Leiterplatte (8) im Bereich der Rollenachse ringförmig oder ringsegment-förmig ausgebildet ist.

4. Förderrolle (1) nach einem der Ansprüche 1 bis 3, **dadurch gekennzeichnet, dass**
- die Lagerkörper (2, 3) zum Einstecken in den Rahmen (17, 18) der Förderanlage in einer ersten Steckrichtung (A) vorbereitet sind,
- die erste Steckrichtung (A) zu einer Rollenachse des Rollenkörpers (4) quer ausgerichtet ist,
- die rollenseitige Steckvorrichtung (7) zum elektrischen Verbinden mit der am Rahmen (17, 18) einer Förderanlage angeordneten anlagenseitigen Steckvorrichtung (21) in einer zweiten Steckrichtung (B) vorbereitet ist, und
- a) die erste Steckrichtung (A) und die zweite Steckrichtung (B) parallel zueinander und gleichgerichtet sind oder b) die zweite Einsteckrichtung (B) tangential zu einem Drehpunkt des Lagerkörpers (2, 3) ausgerichtet ist.

5. Förderrolle (1) nach Anspruch 4, **dadurch gekennzeichnet, dass** die Steckkontakte der Steckvorrichtung (7) in Bezug auf die zweite Steckrichtung (B) nebeneinander angeordnet sind.

6. Förderrolle (1) nach einem der Ansprüche 4 bis 5, **dadurch gekennzeichnet, dass** die erste Steckrichtung (A) nach unten weisend ausgerichtet ist.

7. Förderrolle (1) nach einem der Ansprüche 4 bis 6, **dadurch gekennzeichnet, dass** die erste Steckrichtung (A) im Wesentlichen normal zur Rollenachse und/oder im Wesentlichen normal zu einer Förderebene der Förderanlage ausgerichtet ist.

8. Förderrolle (1) nach einem der Ansprüche 1 bis 7, **dadurch gekennzeichnet, dass** die Steckvorrichtung (7) mit einem der Lagerkörper (2, 3) eine gemeinsame Baueinheit bildet.

9. Förderanlage zum Fördern von Fördergut mit einem Rahmen (17, 18), **gekennzeichnet durch** eine am Rahmen (17, 18) befestigte Förderrolle (1) nach einem der Ansprüche 1 bis 8.

10. Förderanlage nach Anspruch 9, **gekennzeichnet durch** ein Kabel zur elektrischen Energieversorgung (22) und ein Kabel zur Datenübertragung (23), wobei das Kabel zur elektrischen Energieversorgung (22) näher am Rahmen (17,18) angeordnet ist als das Kabel zur Datenübertragung (23).

11. Förderanlage nach Anspruch 10, **gekennzeichnet durch** einer am Rahmen (17, 18) befestigten Anschlussbox (20) für die motorisierte Förderrolle (1), umfassend:
- eine Auflagefläche (38), welche dazu vorbereitet ist im montierten Zustand der Anschlussbox (20) am Rahmen (17, 18) der Förderanlage aufzuliegen,
- erste Schneidklemmkontakte beziehungsweise erste Piercing-Kontakte (29) zum Kontaktieren der Anschlussbox (20) mit dem Kabel zur elektrischen Energieversorgung (22),
- zweite Schneidklemmkontakte beziehungsweise zweite Piercing-Kontakte (30) zum Kontaktieren der Anschlussbox (20) mit dem Kabel zur Datenübertragung (23), wobei die ersten und zweiten Schneidklemmkontakte/Piercing-Kontakte (29, 30) in verschiedenen Bereichen angeordnet sind, und
- eine elektrisch mit den ersten und zweiten Schneidklemmkontakten/Piercing-Kontakten (29, 30) verbundene anlagenseitige Steckvorrichtung (21), welche zum elektrischen Verbinden mit einer rollenseitigen Steckvorrichtung (7) einer am Rahmen (17, 18) der Förderanlage angeordneten Förderrolle (1) vorbereitet ist.

12. Förderanlage nach Anspruch 11, **dadurch gekennzeichnet, dass** die Anschlussbox (20) zumindest eine elektrisch mit den ersten und zweiten Schneidklemmkontakten/Piercing-Kontakten (29, 30) verbundene Zusatz-Steckvorrichtung (26) aufweist, welche zum elektrischen Verbinden mit weiteren am Rahmen (17, 18) der Förderanlage angeordneten Elementen vorbereitet ist.

13. Förderanlage nach einem der Ansprüche 11 bis 12, **dadurch gekennzeichnet, dass** die Anschlussbox (20) zwei weitere Zusatz-Steckkontakte (31) aufweist, welche dazu vorbereitet sind, je ein Verbindungskabel (24) zu einer benachbarten Anschlussbox (20) aufzunehmen.

14. Förderanlage nach einem der Ansprüche 11 bis 13, **dadurch gekennzeichnet, dass** die anlagenseitige Steckvorrichtung (21) der Anschlussbox (20) schwimmend gelagert ist.

15. Förderanlage nach einem der Ansprüche 11 bis 14, **dadurch gekennzeichnet, dass** die anlagenseitige Steckvorrichtung (21) an einem aus der Anschlussbox (20) geführten Kabel (52) angeordnet ist.

16. Förderanlage nach einem der Ansprüche 9 bis 15, **dadurch gekennzeichnet, dass** der Rahmen (17, 18) nach oben hin offene Ausnehmungen (19) umfasst, welche zur Aufnahme von Lagerkörpern (2, 3) der Förderrolle (1) vorgesehen sind.

17. Förderanlage nach Anspruch 16, **dadurch gekennzeichnet, dass** die Lage der anlagenseitigen Steckvorrichtung (21) der Anschlussbox (20) relativ zu der Ausnehmung (19) im Rahmen (17, 18) gleich ist wie die Lage einer rollenseitigen Steckvorrichtung (7) relativ zu dem Lagerkörper (2, 3) der Förderrolle (1).

18. Förderanlage nach einem der Ansprüche 10 bis 17, **dadurch gekennzeichnet, dass** das Kabel zur elektrischen Energieversorgung (22) näher am Rahmen (17, 18) angeordnet ist als das Kabel zur Datenübertragung (23).

19. Förderanlage nach einem der Ansprüche 9 bis 18, **gekennzeichnet durch** eine Kabelanordnung (40), umfassend
- einen ersten elektrischen Leiter (41) sowie wenigstens einen zweiten elektrischen Leiter (42), welche gegeneinander isoliert sind,
- mehrere im Verlauf der Leiter (41,42) angeordnete Steckvorrichtungen (43) mit jeweils mehreren elektrischen Kontakten (44..47), wobei jeweils wenigstens ein Kontakt (44..47) mit einem elektrischen Leiter (41, 42) verbunden ist und,
- wobei der erste Leiter (41) an jeder Steckvorrichtung (43) durchtrennt ist und je ein Ende des ersten Leiters (41) mit je einem elektrischen kontakt (44,45) verbunden ist.

20. Förderanlage nach Anspruch 19, **dadurch gekennzeichnet, dass** der erste Leiter (41) als Daisy-Chain-Leitung und wenigstens ein zweiter Leiter (42) als Datenbusleitung vorgesehen ist.

21. Förderanlage nach Anspruch 20, **dadurch gekennzeichnet, dass** zwei zweite Leiter (42) als Twisted-Pair-Leitung ausgeführt und als Datenbusleitung vorgesehen sind.

22. Förderanlage nach einem der Ansprüche 19 bis 21, **dadurch gekennzeichnet, dass** die Kabelanordnung (40) außen am Rahmen (17) und das mit den Förderrollen (1) elektrisch verbundene Energieversorgungskabel (22) innen am Rahmen (17) angeordnet ist.

23. Förderanlage nach Anspruch 22, **dadurch gekennzeichnet, dass** die elektrische Verbindung der Kabelanordnung (40) mit den Förderrollen (1) durch eine Ausnehmung (25) im Rahmen (17) hindurch erfolgt.

24. Förderanlage nach einem der Ansprüche 10 bis 23, **dadurch gekennzeichnet, dass** der Rahmen (17, 18) mehrere Segmente (39) umfasst und das Kabel zur Datenübertragung (23) beziehungsweise die Kabelanordnung (40) über wenigstens zwei Segmente (39) ungeschnitten verlegt ist.

25. Förderanlage nach einem der Ansprüche 12 bis 24, **dadurch gekennzeichnet, dass** der Rahmen (17, 18) Ausnehmungen (25) im Bereich der Zusatz-Steckvorrichtung (26) der Anschlussbox (20) umfasst.

26. Förderanlage nach einem der Ansprüche 9 bis 25, **dadurch gekennzeichnet, dass** Steckkontakte der anlagenseitigen Steckvorrichtung (21) vom Rahmen (17, 18) beabstandet sind.

27. Verfahren zur Herstellung einer Förderanlage nach einem der Patentansprüche 11 bis 26, **gekennzeichnet durch** die Schritte:
a) Herstellen mehrerer Segmente (39) einer Förderanlage **durch**:
- Montage eines Kabels zur elektrischen Energieversorgung (22) am Rahmen (17, 18),
- Montage einer Anschlussbox (20) am Rahmen (17, 18), wobei die ersten Schneidklemmkontakte/Piercing-Kontakte (29) eine elektrische Verbindung zwischen dem Kabel zur elektrischen Energieversorgung (22) und der anlagenseitigen Steckvorrichtung (21) herstellen und
- Montage einer Förderrolle nach einem der Ansprüche 1 bis 8 am Rahmen (17, 18), wobei das Einstecken der Förderrolle (1) in den Rahmen (17, 18) und das Verbinden der rollenseitigen Steckvorrichtung (7) mit der anlagenseitigen Steckvorrichtung (21) in einem Arbeitsschritt erfolgt,
b) Positionieren der Segmente (39) an ihrem Bestimmungsort,
c) Verbinden der Kabel zur elektrischen Energieversorgung (22) benachbarter Segmente (39) und
d) Montage eines Kabel zur Datenübertragung (23)/einer Kabelanordnung (40) an der Anschlussbox (20), wobei das Kabel zur Datenübertragung (23)/die Kabelanordnung (40) über wenigstens zwei Segmente (39) ungeschnitten verlegt wird.

28. Verfahren nach Anspruch 27, **dadurch gekennzeichnet, dass** im Schritt c) das Kabel zur elektrischen Energieversorgung (22) eines ersten Segments (39) mit dritten Schneidklemmkontakten beziehungsweise dritten Piercing-Kontakten und das Kabel zur elektrischen Energieversorgung (23) eines zum ersten Segment (39) benachbarten zweiten Segments (39) mit vierten Schneidklemmkontakten beziehungsweise vierten Piercing-Kontakten, welche mit den dritten Schneidklemmkontakten beziehungsweise dritten Piercing-Kontakten elektrisch verbunden sind, kontaktiert werden.

## Claims

1. A conveying roller (1) for a conveying system, comprising
- two bearing bodies (2, 3) adapted for mounting the conveying roller (1) in or on a frame (17, 18) of a conveying system,
- a roller body (4) arranged in between thereof, which is rotatably mounted with respect to the bearing bodies (2, 3),
- an electrical drive unit (5) for driving the roller body (4),
- an electrical control unit (6) connected to the drive unit (5) as well as
- a roller-side plug device (7) electrically connected to the control unit (6), which is adapted for being electrically connected to a system-side plug device (21) arranged on the frame (17, 18) of a conveying system and which is essentially rigidly positioned relative to the bearing body (2, 3)
**characterised in that**
the plug device (7) is configured as a circuit board (8) with plug contacts arranged thereon and the control unit (6) is arranged at least partially on the same circuit board (8).

2. The conveying roller (1) according to claim 1, **characterised in that** the plug contacts are configured as conductor tracks of the circuit board (8).

3. The conveying roller (1) according to claim 1 or 2, **characterised in that** the circuit board (8), in the area of the roller axis, is configured in a ring-shaped or ring-segment shaped manner.

4. The conveying roller (1) according to any one of claims 1 to 3, **characterised in that**
- the bearing bodies (2, 3) are adapted for plugging into the frame (17, 18) of the conveying system in a first plug-in direction (A),
- the first plug-in direction (A) is aligned transversely to a roller axis of the roller body (4),
- the roller-side plug device (7) is adapted for being electrically connected to the system-side plug device (21) arranged on the frame (17, 18) of a conveying system in a second plug-in direction (B), and
- a) the first plug-in direction (A) and the second plug-in direction (B) are aligned in parallel and facing in the same direction or b) the second plug-in direction (B) is aligned tangentially to a fulcrum of the bearing body (2, 3).

5. The conveying roller (1) according to claim 4, **characterised in that** the plug contacts of the plug device (7) are arranged next to each other with respect to the second plug-in direction (B).

6. The conveying roller (1) according to any one of claims 4 to 5, **characterised in that** the first plug-in direction (A) is aligned so as to point downwards.

7. The conveying roller (1) according to any one of claims 4 to 6, **characterised in that** the first plug-in direction (A) is aligned essentially normal to the roller axis and/or essentially normal to a conveying plane of the conveying system.

8. The conveying roller (1) according to any one of claims 1 to 7, **characterised in that** the plug device (7) forms a common constructional unit with one of the bearing bodies (2, 3).

9. A conveying system for conveying conveyed goods with a frame (17, 18), **characterised by** a conveying roller (1) according to any one of claims 1 to 8, which is mounted to the frame (17, 18).

10. The conveying system according to claim 9, **characterised by** a cable for the electrical energy supply (22) and a cable for data transmission (23), wherein the cable for the electrical energy supply (22) is arranged closer to the frame (17, 18) than the cable for data transmission (23).

11. The conveying system according to claim 10, **characterised by** a junction box (20) attached to the frame (17, 18), for the motorised conveying roller (1), comprising:
- a support surface (38), which is adapted to touch the frame (17, 18) of the conveying system, when the junction box (20) mounted,
- first insulation displacement contacts / piercing contacts (29) for contacting the junction box (20) with the cable for the electrical energy supply (22),
- second insulation displacement contacts / piercing contacts (30) for contacting the junction box (20) with the cable for data transmission (23), wherein the first and second insulation displacement contacts / piercing contacts (29, 30) are arranged in different areas, and
- a system-side plug device (21) electrically connected to the first and second insulation displacement contacts / piercing contacts (29, 30), which is adapted for electrical connection to a roller-side plug device (7) of a conveying roller (1) arranged on the frame (17, 18) of the conveying system.

12. The conveying system according to claim 11, **characterised in that** the junction box (20) comprises at least one additional plug device (26) electrically connected to the first and second insulation displacement contacts / piercing contacts (29, 30), which additional plug device (26) is adapted for electrical connection to further elements arranged on the frame (17, 18) of the conveying system.

13. The conveying system according to any one of claims 11 to 12, **characterised in that** the junction box (20) comprises two further additional plug contacts (31), which are each adapted to receive a connection cable (24) to an adjacent junction box (20).

14. The conveying system according to any one of claims 11 to 13, **characterised in that** the system-side plug device (21) of the junction box (20) is mounted in a floating manner.

15. The conveying system according to any one of claims 11 to 14, **characterised in that** the system-side plug device (21) is arranged on a cable (52) leading out of the junction box (20).

16. The conveying system according to any one of claims 9 to 15, **characterised in that** the frame (17, 18) comprises recesses (19) open towards the top, which are provided for receiving bearing bodies (2, 3) of the conveying roller (1).

17. The conveying system according to claim 16, **characterised in that** the position of the system-side plug device (21) of the junction box (20) relative to the recess (19) in the frame (17, 18) is identical to the position of the roller-side plug device (7) relative to the bearing body (2, 3) of the conveying roller (1).

18. The conveying system according to any one of claims 10 to 17, **characterised in that** the cable for the electrical energy supply (22) is arranged closer to the frame (17, 18) than the cable for data transmission (23).

19. The conveying system according to any one of claims 9 to 18, **characterised by** a cable arrangement (40) comprising
- a first electrical conductor (41) as well as at least one second electrical conductor (42), which are insulated from each other,
- a number of plug devices (43) arranged along the run of the conductors (41, 42), each with a number of electrical contacts (44..47), wherein respectively at least one contact (44..47) is connected to an electrical conductor (41, 42) and
- wherein the first conductor (41) at each plug device (43) is severed and one end of the first conductor (41) respectively is connected to one electrical contact (44, 45), respectively.

20. The conveying system according to claim 19, **characterised in that** the first conductor (41) is provided as a daisy-chain line and at least one second conductor (42) is provided as a data bus line.

21. The conveying system according to claim 20, **characterised in that** two second conductors (42) are realised as a twisted-pair line and provided as a data bus line.

22. The conveying system according to any one of claims 19 to 21, **characterised in that** the cable arrangement (40) is arranged on the outside of the frame (17) and the energy supply cable (22) electrically connected to the conveying rollers (1) is arranged on the inside of the frame (17).

23. The conveying system according to claim 22, **characterised in that** the electrical connection between the cable arrangement (40) and the conveying rollers (1) runs through a recess (25) in the frame (17).

24. The conveying system according to any one of claims 10 to 23, **characterised in that** the frame (17, 18) comprises a number of segments (39) and the cable for data transmission (23) / the cable arrangement (40) is laid uncut across at least two segments (39).

25. The conveying system according to any one of claims 12 to 24, **characterised in that** the frame (17, 18) comprises recesses (25) in the area of the additional plug device (26) of the junction box (20).

26. The conveying system according to any one of claims 9 to 25, **characterised in that** the plug contacts of the system-side plug device (21) are spaced apart from the frame (17, 18).

27. A method for producing a conveying system according to any one of patent claims 11 to 26 **characterised by** the steps of:
a) producing a number of segments (39) of a conveying system by:
- mounting a cable for the electrical energy supply (22) on the frame (17, 18),
- mounting a junction box (20) on the frame (17, 18), wherein the first insulation displacement contacts / piercing contacts (29) establish an electrical connection between the cable for the electrical energy supply (22) and the system-side plug device (21) and
- mounting a conveying roller according to any one of claims 1 to 8 on the frame (17, 18), wherein plugging-in of the conveying roller (1) into the frame (17, 18) and connecting the roller-side plug device (7) to the system-side plug device (21) is effected in one working step,
b) positioning the segments (39) at their intended location,
c) connecting the cables for the electrical energy supply (22) of adjacent segments (39) and
d) mounting a cable for data transmission (23) / a cable arrangement (40) to the junction box (20), wherein the cable for data transmission (23) / the cable arrangement (40) is laid uncut across at least two segments (39).

28. The method according to claim 27, **characterised in that** in step c) the cable for the electrical energy supply (22) of a first segment (39) is contacted with third insulation displacement contacts / third piercing contacts, and the cable for the electrical energy supply (23) of a second segment (39) adjacent to the first segment (39) is contacted with fourth insulation displacement contacts / fourth piercing contacts, which are electrically connected to the third insulation displacement contacts / the third piercing contacts.

## Revendications

1. Rouleau de transport (1) pour une installation de transport, comprenant
- deux corps de palier (2, 3) qui sont préparés pour la fixation du rouleau de transport (1) dans ou sur un cadre (17, 18) d'une installation de transport,
- un corps de rouleau (4) disposé en position intermédiaire et supporté en rotation par rapport aux corps de palier (2, 3),
- une unité d'entraînement (5) électrique pour l'entraînement du corps de rouleau (4),
- une unité de commande (6) électrique raccordée à l'unité d'entraînement (5) ainsi que
- un dispositif connecteur (7) côté rouleau raccordé électriquement à l'unité de commande (6) et qui est préparé pour le raccordement électrique à un dispositif connecteur (21) côté installation disposé sur le cadre (17, 18) d'une installation de transport et qui est positionné de façon essentiellement rigide par rapport au corps de palier (2, 3),
**caractérisé en ce que**
le dispositif connecteur (7) est formé d'une carte de circuit imprimé (8) portant des contacts enfichables, et l'unité de commande (6) est disposée au moins partiellement sur la même carte de circuit imprimé (8).

2. Rouleau de transport (1) selon la revendication 1, **caractérisé en ce que** les contacts enfichables sont formés d'une piste conductrice de la carte de circuit imprimé (8).

3. Rouleau de transport (1) selon la revendication 1 ou 2, **caractérisé en ce que** la carte de circuit imprimé (8) est constituée de façon annulaire ou en forme de segment d'anneau dans la zone de l'axe de rouleau.

4. Rouleau de transport (1) selon l'une des revendications 1 à 3, **caractérisé en ce que**
- les corps de palier (2, 3) sont préparés pour l'enfichage dans le cadre (17, 18) de l'installation de transport dans une première direction d'enfichage (A),
- la première direction d'enfichage (A) est orientée transversalement à un axe de rouleau du corps de rouleau (4),
- le dispositif connecteur (7) côté rouleau est préparé pour le raccordement électrique au dispositif connecteur (21) côté installation disposé sur le cadre (17, 18) d'une installation de transport dans une deuxième direction d'enfichage (B), et
- a) la première direction d'enfichage (A) et la deuxième direction d'enfichage (B) sont parallèles entre elles et sont de même sens, ou b) la deuxième direction d'enfichage (B) est orientée de façon tangente à un point de rotation du corps de palier (2, 3).

5. Rouleau de transport (1) selon la revendication 4, **caractérisé en ce que** les contacts enfichables du dispositif connecteur (7) sont juxtaposés par rapport à la deuxième direction d'enfichage (B).

6. Rouleau de transport (1) selon l'une des revendications 4 à 5, **caractérisé en ce que** la première direction d'enfichage (A) est orientée en direction du bas.

7. Rouleau de transport (1) selon l'une des revendications 4 à 6, **caractérisé en ce que** la première direction d'enfichage (A) est orientée essentiellement de façon normale à l'axe de rouleau et/ou essentiellement de façon normale à un plan de transport de l'installation de transport.

8. Rouleau de transport (1) selon l'une des revendications 1 à 7, **caractérisé en ce que** le dispositif connecteur (7) forme avec l'un des corps de palier (2, 3) une unité constructive commune.

9. Installation de transport pour le transport de produits à transporter avec un cadre (17, 18), **caractérisée par** un rouleau de transport (1) fixé sur le cadre (17, 18) selon l'une des revendications 1 à 8.

10. Installation de transport selon la revendication 9, **caractérisée par** un câble d'alimentation en énergie électrique (22) et un câble de transmission de données (23), le câble d'alimentation en énergie électrique (22) étant disposé plus près sur le cadre (17, 18) que le câble de transmission de données (23).

11. Installation de transport selon la revendication 10, **caractérisée par** une boîte de raccordement (20) fixée sur le cadre (17, 18) pour le rouleau de transport (1) motorisé, comprenant :
- une surface d'appui (38) qui est préparée pour reposer sur le cadre (17, 18) de l'installation de transport dans l'état monté de la boîte de raccordement (20),
- des premiers contacts à borne guillotine ou respectivement des premiers contacts auto-dénudants (29) pour la mise en contact de la boîte de raccordement (20) avec le câble d'alimentation en énergie électrique (22),
- des deuxièmes contacts à borne guillotine ou respectivement des deuxièmes contacts auto-dénudants (30) pour la mise en contact de la boîte de raccordement (20) avec le câble de transmission de données (23), les premiers et deuxièmes contacts à borne guillotine/contacts auto-dénudants (29, 30) étant disposés dans différentes zones, et
- un dispositif connecteur (21) côté installation raccordé électriquement aux premiers et deuxièmes contacts à borne guillotine/contacts auto-dénudants (29, 30), qui est préparé pour le raccordement électrique à un dispositif connecteur (7) côté rouleau d'un rouleau de transport (1) disposé sur le cadre (17, 18) de l'installation de transport.

12. Installation de transport selon la revendication 11, **caractérisée en ce que** la boîte de raccordement (20) présente au moins un dispositif connecteur supplémentaire (26) raccordé électriquement aux premiers et deuxièmes contacts à borne guillotine/contacts auto-dénudants (29, 30), qui est préparé pour le raccordement électrique à d'autres éléments disposés sur le cadre (17, 18) de l'installation de transport.

13. Installation de transport selon l'une des revendications 11 à 12, **caractérisée en ce que** la boîte de raccordement (20) présente deux autres dispositifs connecteurs supplémentaires (31) qui sont préparés pour recevoir chacun un câble de raccordement (24) à une boîte de raccordement (20) voisine.

14. Installation de transport selon l'une des revendications 11 à 13, **caractérisée en ce que** le dispositif connecteur (21) côté installation de la boîte de raccordement (20) est supporté de façon flottante.

15. Installation de transport selon l'une des revendications 11 à 14, **caractérisée en ce que** le dispositif connecteur (21) côté installation est disposé sur un câble (52) guidé à partir de la boîte de raccordement (20).

16. Installation de transport selon l'une des revendications 9 à 15, **caractérisée en ce que** le cadre (17, 18) comprend des creux (19) ouverts vers le haut qui sont prévus pour la réception de corps de palier (2, 3) du rouleau de transport (1).

17. Installation de transport selon la revendication 16, **caractérisée en ce que** la position du dispositif connecteur (21) côté installation de la boîte de raccordement (20) par rapport au creux (19) dans le cadre (17, 18) est identique à la position d'un dispositif connecteur (7) côté rouleau par rapport au corps de palier (2, 3) du rouleau de transport (1).

18. Installation de transport selon l'une des revendications 10 à 17, **caractérisée en ce que** le câble d'alimentation en énergie électrique (22) est disposé plus près sur le cadre (17, 18) que le câble de transmission de données (23).

19. Installation de transport selon l'une des revendications 9 à 18, **caractérisée par** un agencement de câbles (40), comprenant :
- un premier conducteur(41) électrique ainsi qu'au moins un deuxième conducteur (42) électrique, qui sont isolés l'un vis-à-vis de l'autre,
- plusieurs dispositifs connecteurs (43) disposés sur le tracé des conducteurs (41, 42) avec respectivement plusieurs contacts (44..47), respectivement au moins un contact (44..47) étant raccordé à chaque fois à un conducteur (41, 42) électrique,
- le premier conducteur (41) étant coupé en deux sur chaque dispositif connecteur (43), et respectivement une extrémité du premier conducteur (41) étant raccordée à respectivement un contact électrique (44, 45).

20. Installation de transport selon la revendication 19, **caractérisée en ce que** le premier conducteur (41) est prévu en tant que ligne série et au moins un deuxième conducteur (42) en tant que ligne de bus de données.

21. Installation de transport selon la revendication 20, **caractérisée en ce que** deux deuxièmes conducteurs (42) sont réalisés en tant que ligne twisted-pair et sont prévus en tant que ligne de bus de données.

22. Installation de transport selon l'une des revendications 19 à 21, **caractérisée en ce que** l'agencement de câbles (40) est disposé à l'extérieur sur le cadre (17), et le câble d'alimentation en énergie (22) raccordé électriquement aux rouleaux de transport (1) est disposé à l'intérieur sur le cadre (17).

23. Installation de transport selon la revendication 22, **caractérisée en ce que** le raccordement électrique de l'agencement de câbles (40) aux rouleaux de transport (1) s'effectue à travers un creux (25) dans le cadre (17).

24. Installation de transport selon l'une des revendications 10 à 23, **caractérisée en ce que** le cadre (17, 18) comprend plusieurs segments (39), et le câble de transmission de données (23) ou respectivement l'agencement de câbles (40) est posé sans coupure sur au moins deux segments (39).

25. Installation de transport selon l'une des revendications 12 à 24, **caractérisée en ce que** le cadre (17, 18) comprend des creux (25) dans la zone du dispositif connecteur supplémentaire (26) de la boîte de raccordement (20).

26. Installation de transport selon l'une des revendications 9 à 25, **caractérisée en ce que** des contacts enfichables du dispositif connecteur (21) côté installation sont espacés du cadre (17, 18).

27. Procédé de fabrication d'une installation de transport selon l'une des revendications 11 à 26, **caractérisé par** les étapes suivantes :
a) fabrication de plusieurs segments (39) d'une installation de transport par :
- le montage d'un câble d'alimentation en énergie électrique (22) sur le cadre (17, 18),
- le montage d'une boîte de raccordement (20) sur le cadre (17, 18), les premiers contacts à borne guillotine/contacts auto-dénudants (29) réalisent un raccordement électrique entre le câble d'alimentation en énergie électrique (22) et le dispositif connecteur (21) côté installation, et
- le montage d'un rouleau de transport (1) selon l'une des revendications 1 à 8 sur le cadre (17, 18), l'enfichage du rouleau de transport (1) dans le cadre (17, 18) et le raccordement du dispositif connecteur (7) côté rouleau au dispositif connecteur (21) côté installation s'effectuent en une étape de travail,
b) positionnement des segments (39) sur leur lieu de destination,
c) raccordement des câbles d'alimentation en énergie électrique (22) de segments (39) voisins et
d) montage d'un câble la transmission de données (23) / d'un agencement de câbles (40) sur la boîte de raccordement (20), le câble de transmission de données (23) / l'agencement de câbles (40) étant posés sans coupure sur au moins deux segments (39).

28. Procédé selon la revendication 27, **caractérisé en ce que**, dans l'étape c), le câble d'alimentation en énergie électrique (22) d'un premier segment (39) est mis en contact avec des troisièmes contacts à borne guillotine ou respectivement des troisièmes contacts auto-dénudants, et le câble pour transmission de données (23) d'un deuxième segment (39) voisin du premier segment (39) est mis en contact avec des quatrièmes contacts à borne guillotine ou respectivement des quatrièmes contacts auto-dénudants qui sont raccordés électriquement aux troisièmes contacts à borne guillotine ou respectivement troisièmes contacts auto-dénudants.
